(19) Europäisches Patentamt
European Patent Office
Office européen des brevets

(11) **EP 3 359 914 B1**

(12) **EUROPÄISCHE PATENTSCHRIFT**

(45) Veröffentlichungstag und Bekanntmachung des Hinweises auf die Patenterteilung:
**05.07.2023 Patentblatt 2023/27**

(21) Anmeldenummer: **16777542.8**

(22) Anmeldetag: **14.09.2016**

(51) Internationale Patentklassifikation (IPC):
***G01C 21/16*** *(2006.01)*

(52) Gemeinsame Patentklassifikation (CPC):
**G01C 21/188**

(86) Internationale Anmeldenummer:
**PCT/EP2016/071632**

(87) Internationale Veröffentlichungsnummer:
**WO 2017/060050 (13.04.2017 Gazette 2017/15)**

(54) **FUSION VON POSITIONSDATEN MITTELS POSEN-GRAPH**

FUSION OF POSITION DATA BY MEANS OF POSE GRAPH

FUSION DE DONNÉES DE POSITIONS AU MOYEN D'UN GRAPHE DE POSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2015 DE 102015219577**
**30.06.2016 DE 102016211805**

(43) Veröffentlichungstag der Anmeldung:
**15.08.2018 Patentblatt 2018/33**

(73) Patentinhaber: **Volkswagen Aktiengesellschaft 38440 Wolfsburg (DE)**

(72) Erfinder: **MERFELS, Christian 38102 Braunschweig (DE)**

(56) Entgegenhaltungen:
**WO-A2-2015/105597    DE-A1-102016 205 193 GB-A- 2 500 384**

- **JOERN REHDER ET AL: "Global pose estimation with limited GPS and long range visual odometry", ROBOTICS AND AUTOMATION (ICRA), 2012 IEEE INTERNATIONAL CONFERENCE ON, IEEE, 14. Mai 2012 (2012-05-14), Seiten 627-633, XP032451008, DOI: 10.1109/ICRA.2012.6225277 ISBN: 978-1-4673-1403-9**

EP 3 359 914 B1

**Beschreibung**

TECHNISCHES GEBIET

Die Erfindung betrifft ein Verfahren und ein Steuergerät. Insbesondere betreffen verschiedene Ausführungsformen Techniken, um Odometrie-Positionsdaten und Absolut-Positionsdaten einer Maschine beim Erhalten einer geschätzten Position der Maschine zu berücksichtigen. Dabei wird ein Posen-Graph verwendet. Insbesondere betreffen verschiedene Ausführungsformen einen Posen-Graph mit Kettengeometrie.

HINTERGRUND

Es sind Techniken bekannt, um Karten von Gebieten zu erstellen. Z.B. ist aus DE 10 2013 208 521 A1 ein Verfahren zum kollektiven Erlenen und Erstellen eines digitalen Straßenmodells bekannt. Dabei werden Trajektoriendaten und Perzeptionsdaten für eine Mehrzahl von Trajektorien von einem oder mehreren Fahrzeugen erfasst. Ein Informationsgraph wird gebildet, wobei Trajektorienpunkte der Mehrzahl von Trajektorien Knoten des Informationsgraphen bilden und basierend auf Odometriemessungen und Positionsmessungen Kanten zwischen bzw. an den Knoten des Informationsgraphen gebildet werden. Der Informationsgraph wird optimiert. Eine solche Technik weist den Nachteil auf, dass die Modellbildung aufwendig ist und viel Zeit benötigt. Eine Echtzeitanwendung, z.B. um eine Fahrerassistenzfunktionalität zu steuern, ist typischerweise nicht möglich.

Andererseits sind auch Techniken bekannt, um im Zusammenhang mit einer Fahrerassistenzfunktionalität eine geschätzte Position eines Kraftfahrzeugs zu bestimmen (Positionsbestimmung). Insbesondere sind Techniken der Positionsbestimmung bekannt, welche Absolut-Positionsdaten und Odometrie-Positionsdaten beim Bestimmen der geschätzten Position des Kraftfahrzeugs berücksichtigen. Um die Fahrerassistenzfunktionalität zu gewährleisten, erfolgt dies in Echtzeit.

Dabei indizieren die Absolut-Positionsdaten die gemessene Position des Kraftfahrzeugs zu einem bestimmten Zeitpunkt in absoluten Werten, beispielsweise in einem UTM oder WGS84 Referenzkoordinatensystem. Optional können die Absolut-Positionsdaten auch mit einer Orientierung versehen sein, welche z.B. eine aktuelle Bewegungsrichtung des Kraftfahrzeugs indizieren. Eine Kombination aus Position und Orientierung wird häufig auch als Pose bezeichnet.

Die Odometrie-Positionsdaten hingegen indizieren eine Eigenbewegung bzw. Relativbewegung des Kraftfahrzeugs, zum Beispiel in einem willkürlich festgelegten Referenzkoordinatensystem oder im sogenannten Fahrzeugkoordinatensystem (engl. body frame). Dabei wird die Eigenbewegung z.B. jeweils relativ in Bezug auf eine vorangegangene Position des Kraftfahrzeugs indiziert. Z.B. ist aus US 2014/0078258 A1 ein Verfahren der visuellen Odometrie mittels visueller 3D-Punkte in der Umgebung bekannt. Es sind auch andere Odometrie-Positioniersysteme bekannt, z.B. basierend auf Beschleunigungssensoren etc.

Um verschiedenste Positionsdaten beim Bestimmen der geschätzten Position des Kraftfahrzeugs zu berücksichtigen, sind Techniken der Positionsbestimmung bekannt, die ein oder mehrere Odometrie-Positionsdaten und ein oder mehrere Absolut-Positionsdaten miteinander kombinieren (Sensorfusion). Die verschiedenen Positionsdaten können von unterschiedlichen Positioniersystemen ausgegeben werden. Die Positioniersysteme können unterschiedliche Techniken zur Positionsbestimmung einsetzen, sodass die Positionsdaten der unterschiedlichen Positioniersysteme voneinander unabhängige Schätzungen der Position darstellen können.

Aus DE 10 2013 218 043 A1 ist ein Verfahren zum Bereitstellen relativer Messdaten für einen Fusionssensor bekannt. Der Fusionssensor ist eingerichtet, einen Ausgabewert für eine physikalische Größe durch Filtern zu den relativen Messdaten korrespondierender absoluter Messdaten zu erzeugen. Ein Kalman-Filter kann verwendet werden, um das Rauschen zu berücksichtigen.

Aus DE 10 2014 211 178 A1 ist ein Verfahren zur Korrektur von Messdaten eines ersten Sensorsystems bekannt. Das erste Sensorsystem und / oder ein zweites Sensorsystem erfassen jeweils unterschiedliche Messdaten, die jeweils direkt und / oder indirekt Navigationsdaten beschreiben. Fehlerwerte werden korrigiert, wenn sie beobachtbar sind, und werden als konstant angenommen, wenn sie nicht beobachtbar sind. Die Fehlerwerte können mittels eines Error-State-Space Kalman-Filters bestimmt werden.

Aus DE 10 2014 211 166 A1 ist ein Verfahren und ein entsprechender Fusionsfilter zur Fusion von Sensorsignalen mit unterschiedlichen zeitlichen Signalausgabeverzügen bekannt. Die Sensorsignale umfassen jeweils einen eine Erfassungszeitpunkt der Messwerte beschreibenden Zeitstempel. Fehlerwerte und / oder die Messwerte werden beständig mittels korrigiert. Fehlwerte können mittels eines Error-State-Space-Kalman-Filters bestimmt werden.

Durch das Berücksichtigen mehrerer voneinander unabhängiger Positionsdaten, die als Ausgabe von verschiedenen Positioniersystemen erhalten werden, kann eine genauere und ausfallsicherere Schätzung für die Position des Kraftfahrzeugs bereitgestellt werden. Insbesondere für Anwendungen im Bereich des autonomen Fahrens ist es erforderlich, dass eine möglichst genaue Schätzung der Position des Kraftfahrzeugs mit einer hohen Ausfallsicherheit bereitgestellt werden kann.

Dabei weisen vorbekannte Techniken zur Positionsbestimmung mittels Sensorfusion - insbesondere basierend auf den obenstehend beschriebenen Techniken unter Verwendung eines Kalman-Filters - bestimmte Einschränkungen und Nachteile auf.

Zum Beispiel können Szenarien auftreten, in denen die entsprechenden Positioniersysteme, welche die Positionsdaten als Ausgabe bereitstellen, nicht gleichermaßen in allen Fahrtsituationen des Kraftfahrzeugs ausfallsicher funktionieren. Zum Beispiel sind Positioniersysteme bekannt, welche lediglich in relativ unverbautem Gelände einwandfrei funktionieren (beispielsweise Satelliten-basierte Techniken, wie zum Beispiel GPS). Andere Positioniersysteme sind zum Beispiel auf örtlich begrenzte, vorvermessene Umgebungen beschränkt (beispielsweise lokale Positioniersysteme für ein Parkhaus, etc.).

Der Artikel Rehder, J. et al.: Global Pose Estimation with Limited GPS and Long Range Visual Odometry, 2012 IEEE International Conference on Robotics and Automation, S. 627-633, beschreibt ein Verfahren zur Posenschätzung, welches die Posenschätzung als ein graphenbasiertes nichtlineares Optimierungsproblem behandelt. Das Verfahren nutzt eine einheitliche Darstellung von globalen und lokalen Beschränkungen und reduziert kontinuierlich die Komplexität des Problems.

Herkömmliche Techniken der Positionsbestimmung mittels Sensorfusion, beispielsweise beruhend auf einem Kalman-Filter, können den Nachteil aufweisen, dass bei einer Unterbrechung der Ausgabe einzelner Positioniersysteme bzw. beim Übergang zwischen verfügbaren Positionsdaten unterschiedliche Positioniersysteme keine oder keine besonders genaue Schätzung für die Position des Kraftfahrzeugs bereitgestellt werden kann. Zum Beispiel kann es bei Kalman-Filter-basierten Techniken möglich sein, dass lediglich eine feste Anzahl von fest vorgegebene Positioniersystemen berücksichtigt werden kann; bekannte Implementierungen sind auf das Vorhandensein von Odometrie-Positionsdaten aus einer fest vorgegebenen Quelle in Kombination mit Absolut-Positionsdaten aus einer weiteren fest vorgegebenen Quelle festgelegt.

Darüber hinaus können herkömmliche Techniken der Positionsbestimmung mittels Sensorfusion den Nachteil aufweisen, dass unterschiedliche Positioniersysteme nur mit einer geringen Flexibilität berücksichtigt werden können. Insbesondere kann es nicht oder nur eingeschränkt möglich sein, existierende Algorithmen zum Beispiel um weitere, neue Positioniersysteme zu erweitern oder eine variable Kombination von Positionsdaten unterschiedlichster Positioniersysteme beim Bestimmen der geschätzten Position des Kraftfahrzeugs zu berücksichtigen.

ZUSAMMENFASSUNG

Deshalb besteht ein Bedarf für verbesserte Techniken der Positionsbestimmung. Insbesondere besteht ein Bedarf für Techniken der Positionsbestimmung, welche eine flexible Sensorfusion von Positionsdaten unterschiedlichster Positioniersysteme ermöglichen.

Diese Aufgabe wird von den Merkmalen der unabhängigen Patentansprüche 1 und 6 gelöst.

Die abhängigen Patentansprüche definieren Ausführungsformen.

Das Verfahren gemäß Anspruch 1 umfasst ein Erzeugen eines Posen-Graphen.

Zum Beispiel kann der Posen-Graph vorzugsweise einen Knoten für jeden der mehreren Zeitpunkte aufweisen. Die mehreren Zeitpunkte können also ein Zeitfenster von der IST-Zeit bis in die Vergangenheit abdecken (engl. sliding window). Entsprechend können beim Erzeugen des Posen-Graphen Ausgaben des mindestens einen Odometrie-Positioniersystems und des mindestens einen Absolut-Positioniersystems berücksichtigt werden, die einen aktuellen Zustand der Maschine, sowie Zustände in der näheren Vergangenheit indizieren. Z.B. kann beim Erzeugen des Posen-Graphen vorzugsweise eine fest vorgegebene Anzahl von Zeitpunkten berücksichtigt werden. Die Verwendung des Posen-Graphen kann eine Alternative zur Verwendung der vorbekannten Kalman-Filter zur Sensorfusion darstellen.

Grundlagen zum Posen-Graph und eine entsprechende Optimierung sind beispielsweise aus Kümmerle, R. et al., g2o: A General Framework for Graph Optimization, in Proceedings of the IEEE International Conference on Robotics and Automation (ICRA), 2011 bekannt. Dort ist auch der Aufbau einer entsprechenden Systemmatrix beschrieben. Der Posen-Graph umfasst Knoten, welche zu optimierenden Zustandsvariablen (hier: Absolut-Positionen der Maschine zu einem bestimmten Zeitpunkt) entsprechen, und Kanten, welche einer paarweisen Verknüpfung der Zustände der durch die jeweilige Kante verbundenen Knoten entsprechen. Es ist zum Beispiel möglich, dass die Knoten des Posen-Graphen mit einer Richtung (engl. heading) assoziiert sind; insoweit können die Knoten Posen darstellen. Der Posen-Graph gemäß den verschiedenen hierin offenbarten Szenarien umfasst die Ausgaben des mindestens einen Odometrie-Positioniersystems und des mindestens einen Absolut-Positioniersystems.

Z.B. können in vorteilhaften Ausführungsformen die Schätzungen für die Position der Maschine, wie sie von dem mindestens einen Absolut-Positioniersystem bereitgestellt werden, im Zusammenhang mit Knoten des Posen-Graph berücksichtigt werden. Z.B. können die verschiedenen Knoten des Posen-Graphen über Randbedingungen mit den verschiedenen Absolut-Positionsdaten des mindestens einen Absolut-Positioniersystems verknüpft sein - manchmal werden auch solche Verknüpfungen in Form von Randbedingungen als Kanten des Posen-Graphen bezeichnet; diese Terminologie wird hierin aber zur Vermeidung von Doppeldeutigen nicht übernommen. Dabei können z.B. die Absolut-Positionsdaten formal als Fixknoten berücksichtigt werden, die durch die Optimierung nicht beeinflusst werden, und die zu optimierenden Knoten des Posen-Graphen können als Optimierungsknoten bezeichnet werden. Ein Optimierungsknoten kann mit mehreren Fixknoten, deren Position nicht durch die Optimierung verändert wird, über Randbedingungen verknüpft sein.

Erfindungsgemäß weist der Posen-Graph eine Kettengeometrie auf. Die Kettengeometrie entspricht einer seriellen Aufreihung von Knoten des Posen-Graphen. Dies bedeutet, dass kein Knoten des Posen-Graphen mehr als zwei direkt benachbarte Knoten aufweist.

Durch die Kettengeometrie kann ein besonders effizientes Optimieren des Posen-Graphen ermöglicht werden. Insbesondere kann das Optimieren des Posen-Graphen besonders recheneffizient implementiert werden. Dadurch können zum Beispiel Echtzeitanwendungen gefördert werden.

Dabei ist es auch für eine Kettengeometrie möglich, dass direkt benachbarte Knoten über mehr als eine Kante miteinander verbunden sind. Dies kann zum Beispiel insbesondere der Fall sein, wenn mehrere unterschiedliche Ausgaben für Odometrie-Positionsdaten verfügbar sind. Zum Beispiel wäre es möglich, dass kein Knoten des Posen-Graphen über mehr als 2 N Kanten mit den jeweiligen, direkt benachbarten Knoten verbunden ist. Dabei kann N die Anzahl der Ausgaben des mindestens einen Odometrie-Positioniersystems sein. Zum Beispiel ist es möglich, dass jedes Odometrie-Positioniersystem lediglich eine einzelne Ausgabe bereitstellt: In einem solchen Fall kann N der Anzahl der Odometrie-Positioniersysteme entsprechen.

Eine solche Technik ermöglicht es, einerseits eine Kettengeometrie des Posen-Graphen zu implementieren (und dadurch ein besonders recheneffizientes Optimieren des Posen-Graphen zu ermöglichen); andererseits können derart alle Ausgaben des mindestens einen Odometrie-Positioniersystems berücksichtigt werden (und dadurch die Position der Maschine besonders genau geschätzt werden). Eine flexible Sensorfusion ist möglich.

Wenn zwei direkt miteinander benachbarte Knoten des Posen-Graphen über mehr als eine Kante miteinander verbunden sind, so kann dies parallel verlaufenden Kanten des Posen-Graphen zwischen diesen beiden Knoten entsprechen. Dabei wäre es zum Beispiel möglich, dass die beiden Kanten mit unterschiedlichen Varianzen bzw. Ungenauigkeiten assoziiert sind. Ein solches Szenario kann zum Beispiel dann entstehen, wenn die beiden parallel verlaufenden Kanten mit unterschiedlichen Odometrie-Positioniersystemen assoziiert sind. Die unterschiedlichen Odometrie-Positioniersysteme können zum Beispiel Roh-Odometrie-Positionsdaten mit einer unterschiedlichen Genauigkeit bereitstellen. Aufgrund solcher abweichenden charakteristischen Eigenschaften der parallel verlaufenden Kanten kann es möglich sein, dass das Vorhandensein von mehr als einer Kante zwischen zwei direkt miteinander benachbarten Knoten des Posen-Graphen einen charakteristischen Einfluss auf das Optimierungsergebnis haben kann.

Z.B. können die Eigenbewegungsschätzungen, wie sie als die Ausgabe des mindestens einen Odometrie-Positioniersystems in Form der Odometrie-Positionsdaten bereitgestellt werden, vorteilhafterweise im Zusammenhang mit den Kanten des Posen-Graphen berücksichtigt werden. Wiederum können vorteilhafterweise Optimierungskanten und Fixkanten berücksichtigt werden, die in Form von Randbedingungen verknüpft sind. Die Optimierungskanten können vorzugsweise durch zwei benachbarte Optimierungsknoten vorgegeben sein. Zum Beispiel sind Szenarien denkbar, bei denen mehr als ein Odometrie-Positioniersystem Ausgaben bereitstellt; in einem solchen Szenario ist es möglich, dass mehr als eine Kante zwischen zwei benachbarten Knoten des Posen-Graphen vorhanden ist.

Im Zusammenhang mit dem Posen-Graphen, der die Kettengeometrie aufweist, kann es auch möglich sein, dass keine Kante mehr als zwei Knoten miteinander verbindet. Zum Beispiel können Szenarien vermieden werden, in welchen eine durchgängige Kante mit drei oder mehr Knoten verbunden ist, d.h. als Randbedingung auf mehr als zwei Knoten wirkt. Dies kann eine besonders einfache Struktur des Posen-Graphen ermöglichen. Dadurch kann die Optimierung besonders recheneffizient implementiert werden.

Im Zusammenhang mit dem Posen-Graphen, der die Kettengeometrie aufweist, ist es so, dass der Posen-Graph keine Verzweigungen aufweist. Eine Verzweigung kann zum Beispiel eine Situation entsprechen, in der mehr als drei Äste des Posen-Graphen, die jeweils eine oder mehrere Kanten und einen oder mehrere Knoten aufweisen, an einem Knoten zusammenlaufen. Indem Verzweigungen des Posen-Graphen vermieden werden, kann eine besonders einfache Struktur des Posen-Graphen ermöglicht werden. Dadurch kann die Optimierungszeitdauer, die zum Durchführen des Optimierens benötigt wird, reduziert werden.

Durch die Implementierung des Posen-Graphen mit Kettengeometrie kann eine besonders einfache Struktur der zugrundeliegenden Systemmatrix, die den Posen-Graphen abbildet, erzielt werden. Zum Beispiel wäre es für ein 2-D Szenario möglich, dass die den Posen-Graphen beschreibende Systemmatrix blockdreidiagonalen Form aufweist.

Durch eine solche Form der Systemmatrix können verschiedene Effekte erzielt werden.

Erstens kann eine besonders recheneffiziente Invertierung der Systemmatrix erfolgen. Typischerweise ist im Zusammenhang mit dem Optimieren des Posen-Graphen eine Invertierung der Systemmatrix erforderlich. Beispielsweise können speziell für blockdreidiagonale Matrizen ausgelegte Techniken für die Invertierung verwendet werden. Ein Beispiel ist die sogenannte Cholesky-Zerlegung. Diese Technik weist einen Aufwand in der Größenordnung von $O(n)$ auf, wobei $n$ die Anzahl der Optimierungsknoten des Posen-Graphen ist. Im Gegensatz zu einem Posen-Graphen der keine Kettengeometrie aufweist, kann derart eine besonders recheneffiziente Invertierung durchgeführt werden.

Zum Beispiel kann nämlich eine Systemmatrix, die den Posen-Graphen ohne Kettengeometrie beschreibt, beliebig besetzt sein. Eine solche beliebig besetzte Systemmatrix kann im Allgemeinen nur mit einem Rechenaufwand der Ordnung ca. $O(n^{2,4})$ in die Cholesky-Fakturierung zerlegt werden. Dadurch kann die Optimierungszeitdauer reduziert werden.

Zweitens benötigt das Optimieren des Posen-Graphen im Zusammenhang mit der blockdreidiagonalen Form der Systemmatrix typischerweise vergleichsweise wenig Speicherplatz. Dies ist der Fall, da kein so genannter "fill-in" entsteht. "Fill-in" bedeutet, dass der Optimierungsalgorithmus während des Durchführens der Optimierung zusätzliche Elemente abspeichern muss, die über diejenigen Elemente des Ausgangsproblems hinausgehen. Für eine beliebig angeordnete Struktur der Systemmatrix - wie sie für den Posen-Graphen ohne Kettengeometrie auftreten kann - entsteht im Allgemeinen ein solcher "fill-in", sodass zusätzlicher Speicherplatz benötigt wird.

Drittens kann das Durchführen des Optimierens aufgrund des zusätzlich benötigten Speicherplatzes auch langsamer werden. Dies ist der Fall, da typischerweise Speicher-Zugriffsoperationen mit einer gewissen Latenz assoziiert sind. Da - wie voranstehend beschrieben - für einen Posen-Graphen ohne Kettengeometrie sogenannte "fill-in" Elemente zusätzlich abgespeichert werden müssen, sind zusätzliche Speicher-Zugriffsoperationen erforderlich; dies bewirkt eine Verlangsamung der Optimierung. Mittels der hierin beschriebenen Techniken kann also die Optimierungszeitdauer verkürzt werden.

Viertens kann das Durchführen des Optimierens aufgrund der Vermeidung von im Zusammenhang mit dem Optimieren durchgeführten Assistenz-Funktionalitäten beschleunigt werden. Zum Beispiel kann für nicht in blockdreidiagonaler Form vorliegende Matrizen eine Umsortierung von Zustandsvariablen (engl. "variable reordering technique") zur Minimierung von "fill-in" vermieden werden. Typischerweise wird eine solche Umsortierung zu Beginn der Optimierung durchgeführt. Das Durchführen der Umsortierung benötigt selbst eine gewisse Zeitdauer, die als zusätzliche Latenz das Durchführen der Optimierung verlangsamt. Für blockdreidiagonale Matrizen ist es nicht erforderlich, diese Umsortierung durchzuführen, da grundsätzlich kein "fill-in" auftritt. Auch derart kann die Optimierungszeitdauer besonders kurz implementiert werden.

Fünftens kann eine Marginalisierung von alten Knoten und Kanten des Posen-Graphen besonders effizient durchgeführt werden. Z.B. kann das Marginalisieren umfassen: Auswählen eines Knotens des Posen-Graphen nach dem Optimieren; und für den ausgewählten Knoten: Bestimmen eines Fixknotens des Posen-Graphen. Der ausgewählte Knoten kann dann aus dem Posen-Graphen entfernt werden. Solche Techniken der Marginalisierung verhindern, dass der Posen-Graph bei längerer Laufzeit unbegrenzt wächst. Bei typischen Techniken der Marginalisierung bewirkt die Information der zu entfernenden Knoten eine Verbindung zwischen allen direkt mit dem zu entfernenden Knoten benachbarten weiteren Knoten. In einem Szenario, bei dem immer der älteste Knoten entfernt wird, kann für einen Posen-Graphen mit Kettengeometrie eine Aufspaltung des Posen-Graphen vermieden werden. Negative Auswirkungen auf die Komplexität des Optimierens können deshalb vermieden werden. Dies steht im Gegensatz zu einem Posen-Graphen, der keine Kettengeometrie aufweist. In einem solchen Fall kann das Marginalisieren eines Knotens, zum Beispiel des ältesten Knotens, zu einer weiteren Aufspaltung bzw. Verzweigung des Posen-Graphen führen. Dies resultiert im Laufe der Zeit bei beliebig angeordneten Kanten darin, dass der Posen-Graph dichter und dichter besetzt wird. Dies bedeutet, dass die Struktur der Systemmatrix nicht mehr dünn besetzt ist. Dies wiederum bedeutet, dass die Optimierung immer langsamer wird und mehr Speicherplatz benötigt. Mittels der hierin beschriebenen Techniken kann also erreicht werden, dass das Optimierungsproblem mit zunehmender Anzahl von Iterationen bzw. Anwendungsdauer nicht komplexer wird. Dadurch kann auch die Optimierungszeitdauer begrenzt werden.

Zusammenfassend kann also eine Systemmatrix mit blockdreidiagonaler Form verschiedene vorteilhafte Effekte aufweisen. Dies bedeutet auch, dass der Posen-Graph mit Kettengeometrie entsprechende vorteilhafte Effekte aufweist. Insbesondere kann die Optimierung effizienter durchgeführt werden: dies bedeutet, dass die Optimierung schneller, weniger Speicher intensiv und mit keine oder nur einer geringen Abhängigkeit der Optimierungszeit von der Iterationszahl bzw. Anwendungsdauer durchgeführt werden kann. Eine kurze Optimierungszeitdauer wird erzielt.

Da die unterschiedlichen Odometrie-Positionsdaten und Absolut-Positionsdaten Abweichungen voneinander aufweisen können, kann es mittels des Optimierens des Posen-Graph möglich sein, die geschätzte Position als besten Kompromiss zwischen den verschiedenen Absolut-Positionsdaten und Odometrie-Positionsdaten zu erhalten. Im Rahmen des Optimierens des Posen-Graphen können die Knoten und Kanten verschoben werden, d.h. gegenüber den aus den Ausgaben der Positioniersystem erhaltenen Werten verändert werden. Die zu optimierenden Knoten werden häufig als Optimierungsknoten bezeichnet. Die Optimierungsknoten sind durch Randbedingungen mit den aus den Ausgaben der Positioniersysteme erhaltenen Knoten und Kanten verknüpft.

Es ist möglich, dass die Absolut-Positionsdaten und/oder die Odometrie-Positionsdaten mit einer gewissen Unsicherheit behaftet sind. Eine solche Unsicherheit kann auch als Varianz bezeichnet werden. Zum Beispiel kann die Varianz der Odometrie-Positionsdaten und/oder der Absolut-Positionsdaten beim Optimieren des Posen-Graph berücksichtigt werden.

Im Zusammenhang mit dem Posen-Graph werden oftmals Fehlerterme definiert, welche umso größer (kleiner) sind, umso weiter (weniger weit) sich die durch das Optimieren geschätzte Positionen von den Ausgaben der Positioniersysteme entfernen und je kleiner (größer) die Varianz der entsprechenden Ausgaben der Positioniersysteme ist. Das Optimieren kann vorzugsweise eine Konfiguration des Posen-Graphen bereitstellen, welche einem extremalen Wert der Fehlerterme entspricht. Vorzugsweise wird ein globaler extremaler Wert der Fehlerterme angestrebt. Das Optimieren kann in vorteilhafter Weise numerisch erfolgen. Das Optimieren kann in vorteilhafter Weise iterativ erfolgen, d.h. mehrere Optimierungsiterationen umfassen. Zum Beispiel kann das Optimieren vorteilhafterweise eine Technik nichtlinearer minimaler Quadrate (engl. nonlinear least-squares) umfassen. Zum Beispiel kann das Optimieren vorteilhafterweise mittels einer Gauß-Newton-Technik erfolgen und/oder mittels einer Levenberg-Marquardt-Technik erfolgen.

Solche Techniken ermöglichen eine Echtzeitanwendung. Z.B. kann die Maschine ein Kraftfahrzeug sein. Vorzugsweise umfasst die erfindungsgemäße Lösung weiterhin das Steuern einer Fahrerassistenzfunktionalität basierend auf der geschätzten Position des Kraftfahrzeugs. Z.B. kann die Fahrerassistenzfunktionalität vorzugsweise autonomes Fahren des Kraftfahrzeugs betreffen. Es wäre auch möglich, dass die Fahrerassistenzfunktionalität vorteilhafterweise teilautomatisches oder hochautomatisches Fahren betrifft. Es wäre auch möglich, dass die Fahrerassistenzfunktionalität vorteilhafterweise einen Stauassistent betrifft. Es ist zum Beispiel vorzugsweise möglich, dass die Fahrerassistenzfunktionalität die Position des Kraftfahrzeugs beeinflusst. Insoweit kann basierend auf der geschätzten Position die Position des Kraftfahrzeugs beeinflusst werden. Z.B. kann die Fahrerassistenzfunktionalität einen elektrischen Lenkstrang des Kraftfahrzeugs steuern. Z.B. kann die Fahrerassistenzfunktionalität vorzugsweise die Bremsen und den Motor des Kraftfahrzeugs steuern. Z.B. kann die Fahrerassistenzfunktionalität umfassen: einen Spurhalteassistenten; einen Abstandsassistenten; einen Einparkassistenten; etc.

Durch das Verwenden des Posen-Graphen ist es möglich, vorzugsweise eine unterschiedliche Anzahl von Odometrie-Positionsdaten und/oder eine unterschiedliche Anzahl von Absolut-Positionsdaten zu berücksichtigen. Insbesondere ist es möglich, dass die Anzahl der Odometrie-Positionsdaten und/oder die Anzahl der Absolut-Positionsdaten, die beim Erzeugen des Posen-Graph berücksichtigt wird, als Funktion der Zeit variiert. Durch die generische Verwendung der Odometrie-Positionsdaten und der Absolut-Positionsdaten können die zu fusionierenden Ausgaben verschiedener Positioniersysteme modular ausgewechselt werden. Derart kann es vorteilhafterweise möglich sein, immer sämtliche verfügbaren Ausgaben von Positioniersystemen zu berücksichtigen. Derart kann es vorzugsweise möglich sein, auch in Übergangssituationen, bei denen Ausgaben von bestimmten Positioniersystemen gerade nicht mehr oder nur noch eingeschränkt verfügbar sind, jedoch Ausgaben von weiteren Positioniersystemen verfügbar werden, die geschätzte Position der Maschine mit einer besonders hohen Zuverlässigkeit zu erhalten.

Darüber hinaus erlaubt die Verwendung des Posen-Graphen im Vergleich zu Referenzimplementierungen basierend auf Kalman-Filtern eine genauere Schätzung der Position der Maschine nicht nur für die IST-Zeit, sondern auch für die Vergangenheit.

In verschiedenen vorteilhaften Szenarien kann das Optimieren des Posen-Graphen weiterhin eine Zuverlässigkeit der geschätzten Position der Maschine bereitstellen. Es ist möglich, dass die Fahrerassistenzfunktionalität der Maschine weiterhin basierend auf der Zuverlässigkeit der geschätzten Position gesteuert wird.

Die Zuverlässigkeit kann z.B. vorzugsweise die Summe der Fehlerterme für die verschiedenen Knoten des optimierten Posen-Graphen berücksichtigt werden. Aktuellere (ältere) Knoten können einen größeren (geringeren) Einfluss auf die Zuverlässigkeit der geschätzten Position aufweisen. Zum Beispiel kann in einem Szenario, bei dem die durch das Optimieren erhaltene Zuverlässigkeit der geschätzten Position vergleichsweise groß wird, ein manueller Fahrereingriff von der Fahrerassistenzfunktionalität gefordert werden.

Durch das Berücksichtigen der Zuverlässigkeit der geschätzten Position kann die Fahrerassistenzfunktionalität mit einer großen Sicherheit gesteuert werden; insbesondere kann vermieden werden, dass die Fahrerassistenzfunktionalität auf Grundlage von nicht oder nur eingeschränkt belastbaren Schätzungen für die Position des Kraftfahrzeugs gesteuert wird.

In verschiedenen vorteilhaften Szenarien kann das Optimieren des Posen-Graphen weiterhin eine geschätzte Odometrie der Maschine bereitstellen. Es ist möglich, dass die Fahrerassistenzfunktionalität des Kraftfahrzeugs weiterhin basierend auf der geschätzten Odometrie gesteuert wird.

Die Odometrie kann z.B. vorteilhafterweise eine aktuelle Orientierung / Fahrrichtung der Maschine indizieren. Zusammen mit der geschätzten Position des Kraftfahrzeugs kann so eine geschätzte Position und Orientierung (Pose) des Kraftfahrzeugs bereitgestellt werden.

Zum Beispiel kann vorteilhafterweise durch das Optimieren des Posen-Graphen die geschätzte Position der Maschine zu einem in Bezug auf die mehreren Zeitpunkte zukünftigen Zeitpunkt erhalten werden.

In anderen Worten kann es in verschiedenen vorteilhaften Ausführungsformen möglich sein, dass die Position für einen zukünftigen Zeitpunkt abgeschätzt wird. Es kann also eine Vorhersage für die Position der Maschine getroffen werden.

Das Erzeugen und Optimieren des Posen-Graph benötigt eine gewisse Zeitdauer (Optimierungszeitdauer). Die Optimierungszeitdauer kann durch das Bereitstellen der geschätzten Position für den zukünftigen Zeitpunkt kompensiert werden.

Dadurch kann es möglich sein, die Fahrerassistenzfunktionalität besonders zielgerichtet zu steuern. Insbesondere kann es möglich sein, mit einer besonders geringen Latenzzeit eine Information über die aktuelle Position der Maschine bereitzustellen. Echtzeitanwendungen sind möglich.

Die Optimierungszeitdauer kann durch Begrenzen der Anzahl von Knoten des Posen-Graphen reduziert werden. Dazu kann eine Technik der Marginalisierung eingesetzt werden. Z.B. kann das Marginalisieren umfassen: Auswählen eines Knotens des Posen-Graphen nach dem Optimieren; und für den ausgewählten Knoten: Bestimmen eines Fixknotens des Posen-Graphen. Der ausgewählte Knoten kann dann aus dem Posen-Graphen entfernt werden. Durch das Entfernen des ausgewählten Knotens aus dem Posen-Graph kann die Anzahl der Knoten des Posen-Graphen reduziert werden. Indem jedoch gleichzeitig der Fixknoten für den Posen-Graphen bestimmt wird, kann ein nachfolgendes Optimieren des Posen-Graphen trotzdem eine hohe Genauigkeit aufweisen.

Zum Beispiel könnte das Verfahren also weiterhin, nach dem Entfernen des ausgewählten Knotens umfassen: erneutes Optimieren des Posen-Graphen zum Erhalten einer weiteren geschätzten Position der Maschine. Die Position des Fixknotens kann gegenüber dem erneuten Optimieren unveränderlich sein. Der Fixknoten kann über eine Kante mit einem benachbarten Knoten des Posen-Graphen verbunden sein. Indem die Position des Fixknotens gegenüber dem erneuten Optimieren unveränderlich bzw. fix ist, kann die Komplexität des erneuten Optimierens vergleichsweise begrenzt sein. Dadurch kann die Optimierungszeitdauer reduziert werden.

Solchen Techniken der Marginalisierung liegt die Erkenntnis zugrunde, dass es aufgrund von Restriktionen in der Komplexität der Optimierung des Posen-Graphen oftmals erforderlich sein kann, die Anzahl von Knoten und Kanten des Posen-Graphen zu reduzieren. Dies kann durch Entfernen bzw. Löschen einzelner Knoten und Kanten des Posen-Graphen erfolgen. Zum Beispiel können die ältesten Knoten und Kanten des Posen-Graphen gelöscht werden, d.h. es kann derjenige Knoten des Posen-Graphen ausgewählt werden, der dem ältesten Zeitpunkt entspricht. Ein solches Löschen von alten Knoten und Kanten bewirkt herkömmlicherweise, dass alte Positionsdaten keinen Einfluss mehr auf die aktuelle Schätzung der Position aufweisen. Dies führt dazu, dass die Schätzungen eine begrenzte Genauigkeit aufweisen. Zum Beispiel können die Schätzungen für die Position eine vergleichsweise hohe Ungenauigkeit aufweisen.

Deshalb sind in vorbekannten Techniken Ansätze zur sogenannten Marginalisierung bekannt. Vorbekannte Ansätze zur Marginalisierung umfassen das Bilden des Schur-Komplements auf die Systemmatrix. Solche Techniken haben keine modellhafte Entsprechung im Posen-Graph. Solche Techniken resultieren häufig in einer dichter besetzten Systemmatrix; dadurch kann wiederum der Rechenaufwand zum Durchführen der Optimierung erhöht werden, wodurch wiederum die Optimierungszeitdauer vergleichsweise lang sein kann.

Die hierin beschriebenen Techniken ermöglichen es, durch Vorsehen des Fixknotens anstelle des ausgewählten Knotens, beispielsweise desjenigen Knotens, der dem ältesten Zeitpunkt entspricht, einerseits eine dichtere Besetzung der Systemmatrix - und damit eine verlängerte Optimierungszeitdauer - zu vermeiden und gleichzeitig die Genauigkeit bei der Abschätzung der Position durch Optimieren des Posen-Graphen nicht oder nicht signifikant herabzusetzen. Die hierin beschriebenen Techniken ermöglichen daher eine besonders genaue Marginalisierung des Posen-Graphen im Vergleich zu vorbekannten Techniken. Mittels der hier beschriebenen Techniken kann es also möglich sein, dass auch nach mehreren Marginalisierungen des Posen-Graphen das Optimierungsproblem handhabbar bleibt und nicht als Funktion der Zeit degeneriert.

Es können unterschiedliche Techniken zum Bestimmen des Fixknotens eingesetzt werden. Zum Beispiel kann der Fixknoten basierend auf Elementen bestimmt werden, die aus folgender Gruppe ausgewählt sind: die Position des ausgewählten Knotens; mindestens eine Kante, die mit dem ausgewählten Knoten verbunden ist; Absolut-Positionsdaten, die dem ausgewählten Knoten entsprechen; und ein weiterer Fixknoten, der über eine Kante mit dem ausgewählten Knoten verbunden ist. Zum Beispiel können die Absolut-Positionsdaten über einen Fixknoten repräsentiert werden. Solche Fixknoten, die über eine Kante als Randbedingung mit dem ausgewählten Knoten verbunden sind, können beim Bestimmen des Fixknotens berücksichtigt werden; andere Absolut-Positionsdaten können unberücksichtigt bleiben. Zum Beispiel kann der weitere Fixknoten im Rahmen einer vorangegangenen Marginalisierung bestimmt worden sein. Zum Beispiel können alle weiteren vorhandenen entsprechenden weiteren Fixknoten berücksichtigt werden. Derart kann es zum Beispiel möglich sein, dass der Fixknoten Informationen in Bezug auf den ausgewählten und entfernten Knoten in sich bündelt. Vergangene Information wird dann durch das Entfernen des ausgewählten Knotens nicht einfach verworfen, sondern auf den Fixknoten übertragen. Deshalb könnte der Fixknoten auch als Prior-Fixknoten bezeichnet werden.

Da ein solcher Fixknoten im Graphen direkt dargestellt werden kann, ist eine semantische Interpretation einfach möglich - im Gegensatz zur herkömmlichen Marginalisierung auf Grundlage des Schur-Komplements. Eine solche semantische Interpretation könnte zum Beispiel lauten: "die gebündelten Positionsinformationen, die bisher aus dem Posen-Graphen entfernt wurden, führen zu der Schätzung, dass die Maschine sich an der Position des Fixknotens befunden hat". Vorteilhafterweise wäre es also möglich, dass der Fixknoten das Schur-Komplement des ausgewählten Knotens darstellt. Damit kann erreicht werden, dass der Fixknoten eine Reduktion der Genauigkeit der Optimierung durch Entfernen des ausgewählten Knotens vermeidet. In anderen Ausführungsformen sind aber auch andere Techniken zum Bestimmen des Fixknotens möglich.

Der Posen-Graph, der den Fixknoten aufweist, nicht jedoch den ausgewählten Knoten, kann weiterhin das vollständige bzw. ursprüngliche Optimierungsproblem repräsentieren. Jedoch ist es entbehrlich, die Systemmatrix-Darstellung des Posen-Graphen zum vollständigen Verständnis zu berücksichtigen. Dies verbessert das Potenzial zum Problemverständnis des Entwicklers/Nutzers, Analysemöglichkeiten und Manipulationsmöglichkeiten zur Lösung des Problems.

Als weiterer Effekt ermöglicht es der Fixknoten, die Unsicherheit der alten Informationen anzupassen und die Gewichtung zu beeinflussen, falls dies erforderlich ist. Zum Beispiel könnte das Verfahren weiterhin umfassen, vor dem Durchführen einer erneuten Optimierung: Anpassen einer Verlustfunktion der Kante des Posen-Graphen, die zwischen dem Fixknoten und dem benachbarten Knoten verläuft, und/oder Anpassen einer Unsicherheit des Fixknotens. Besonders unplausible Information, die in dem Fixknoten abgebildet ist, kann dann mit einer größeren Unsicherheit berücksichtigt werden, was eine Toleranz bei der Optimierung erhöhen kann. Es ist auch möglich eine robuste Kosten- oder Verlustfunktion auf den Fehlerterm der Randbedingung, die durch den Fixknoten repräsentiert wird, anzuwenden.

Zum Beispiel wäre es möglich, dass das Entfernen des ausgewählten Knotens selektiv in Abhängigkeit einer Anzahl von Knoten des Posen-Graphen durchgeführt wird. Überschreitet zum Beispiel die Anzahl der Knoten des Posen-Graphen einen vorgegebenen Schwellenwert, so kann jeweils der älteste Knoten aus dem Posen-Graphen ausgewählt und entfernt werden, wobei gleichzeitig der entsprechende Fixknoten bestimmt wird. Dadurch kann einerseits erreicht werden, dass die Optimierungszeitdauer durch eine besonders große Anzahl von Knoten nicht unverhältnismäßig lange wird; gleichzeitig kann jedoch eine unnötig häufige Marginalisierung des Posen-Graphen vermieden werden.

Gemäß verschiedener vorteilhafter Beispiele ist es möglich, dass die mehreren Zeitpunkte für welche die Odometrie-Positionsdaten und die Absolut-Positionsdaten ermittelt werden, basierend auf einer vorgegebenen Taktrate bestimmt werden. Dann ist es vorzugsweise möglich, dass jeweils mit zugehörigen Abtastraten Roh-Odometrie-Positionsdaten als die Ausgabe des mindestens einen Odometrie-Positioniersystems empfangen werden. Entsprechend ist es vorzugsweise möglich, dass jeweils mit zugehörigen Abtastraten Roh-Absolut-Positionsdaten als die Ausgabe des mindestens einen Absolut-Positioniersystems empfangen werden. Dabei kann die vorgegebene Taktrate verschieden von den Abtastraten sein. Die Abtastraten können als Funktion der Zeit variieren.

Das Verfahren umfasst weiterhin: Interpolieren der Roh-Absolut-Positionsdaten basierend auf der vorgegebenen Taktrate und optional basierend auf der jeweiligen Abtastrate zum Ermitteln der Absolut-Positionsdaten für jeden der mehreren Zeitpunkte, und Interpolieren der Roh-Odometrie-Positionsdaten basierend auf der vorgegebenen Taktrate und optional basierend auf der Abtastrate zum Ermitteln der Odometrie-Positionsdaten für die verschiedenen Zeitpunkte. Das Interpolieren kann also vorzugsweise im Orts-Zeitraum erfolgen. Z.B. kann das Interpolieren in einem Referenzkoordinatensystem des Posen-Graphen erfolgen.

Zum Beispiel wäre es in manchen Szenarien möglich, dass die Abtastrate, mit der die bestimmten Roh-Odometrie-Positionsdaten erhalten werden, kleiner als die Taktrate ist. In einem solchen Fall umfasst das Interpolieren der Roh-Odometrie-Positionsdaten vorzugsweise eine Verringerung der Zeitauflösung der derart ermittelten Odometrie-Positionsdaten gegenüber den entsprechenden Roh-Odometrie-Positionsdaten. Dadurch kann erreicht werden, dass eine den bestimmten Roh-Odometrie-Positionsdaten entsprechende Kante keine Knoten des Posen-Graphen überspringt. Dadurch können Verzweigungen des Posen-Graphen vermieden werden und es kann die Kettengeometrie des Posen-Graphen - mit den verschiedenen oben genannten vorteilhaften Effekten - erreicht werden.

Zum Beispiel ist es in manchen Szenarien möglich, dass die Abtastrate, mit der bestimmte Roh-Odometrie-Positionsdaten erhalten werden, größer als die Taktrate ist. In einem solchen Fall umfasst das Interpolieren der Roh-Odometrie-Positionsdaten vorzugsweise eine Erhöhung der Zeitauflösung der derart ermittelten Odometrie-Positionsdaten gegenüber den entsprechenden Roh-Odometrie-Positionsdaten. Dadurch kann erreicht werden, dass benachbarte Knoten des Posen-Graphen lediglich durch eine einzige, den bestimmten Roh-Odometrie-Positionsdaten entsprechende Kante verbunden werden. Die Kettengeometrie des Posen-Graphen wird ermöglicht.

In verschiedenen vorteilhaften Varianten ist es möglich, dass eine Koordinatentransformation der Roh-Absolut-Positionsdaten und/oder der Roh-Odometrie-Positionsdaten durchgeführt wird, um jeweils die Absolut-Positionsdaten und/oder die Odometrie-Positionsdaten zu erhalten. Zum Beispiel könnte eine Koordinatentransformation zwischen einem UTM-Koordinatensystem und einem WGS84-Koordinatensystem durchgeführt werden. Es wäre vorteilhafterweise auch möglich, dass die Koordinatentransformation eine Koordinatenrotation umfasst. Zum Beispiel könnte eine Rotation zwischen einem proprietären Referenzsystem, beispielsweise Geschwindigkeit und Gierrate des Kraftfahrzeugs als Maschine, und dem Referenzsystem des Posen-Graphen stattfinden. Zum Beispiel kann vorzugsweise ein Modell des Kraftfahrzeugs berücksichtigt werden, um Fahrzeug-spezifische Eigenschaften bei der Koordinatentransformation zu berücksichtigen.

Mittels solcher Techniken ist es möglich, dass unterschiedliche Zeitverhalten der verschiedenen Positioniersysteme flexibel berücksichtigt werden. Insbesondere ist es nicht notwendig, dass die verschiedenen Positioniersysteme die Ausgaben mit einer fest vorgegebenen oder statischen Abtastrate bereitstellen. Es muss keine a-priori Annahme über das Zeitverhalten der bei dem Erzeugen des Posen-Graph berücksichtigten Positionsdaten getroffen werden.

Zum Beispiel wäre es vorteilhafterweise möglich, dass die Roh-Odometrie-Positionsdaten und/oder die Roh-Absolut-Positionsdaten jeweils mit einem Zeitstempel versehen sind. Zum Beispiel könnte vorteilhafterweise der Zeitstempel einen Zeitpunkt indizieren, zu welchem das jeweilige Positioniersystem die Odometrie-Positionsdaten und/oder die Roh-Absolut-Positionsdaten gemessen hat.

Zum Beispiel kann es vorteilhafterweise möglich sein, dass Positionsdaten unterschiedlicher Positioniersysteme nicht in einer zeitsequenziellen Abfolge bereitgestellt werden, sondern in einer Reihenfolge, die gegenüber den entsprechenden Zeitstempeln vertauscht ist. Dies kann der Fall sein, da unterschiedliche Positioniersysteme unterschiedliche Abtastraten und/oder unterschiedliche Latenzzeiten aufweisen können. Zum Beispiel können die Odometrie-Positionsdaten und die Absolut-Positionsdaten für die mehreren Zeitpunkte in einem Speicher zwischengespeichert werden.

Beim Erzeugen des Posen-Graphen können solche nicht zeitsequenziell empfangenen Roh-Positionsdaten in der Vergangenheit einfach eingefügt werden. Dies erhöht die Flexibilität beim Fusionieren der Ausgaben unterschiedlichster Positioniersysteme. Eine Echtzeit-Erzeugung und Optimierung des Posen-Graphen kann entbehrlich sein, da eine Vorhersage für die geschätzte Position zu dem zukünftigen Zeitpunkt getroffen werden kann.

Es ist zum Beispiel vorzugsweise möglich, dass jeweils eine Iteration des Erzeugens und Optimierens des Posen-Graphen für jeden Takt einer vorgegebenen Optimierungstaktrate durchgeführt wird. Für jede Iteration kann vorteilhafterweise die entsprechende geschätzte Position der Maschine erhalten werden.

Es ist möglich, dass die Optimierungstaktrate verschieden von der Taktrate, welche die mehreren Zeitpunkte bestimmt, gewählt wird. Es wäre aber auch möglich, dass die Optimierungstaktrate gleich der Taktrate zum Bestimmen der mehreren Zeitpunkte gewählt wird. In beiden Szenarien kann es möglich sein, dass der Posen-Graph iterativ erzeugt wird, d.h. dass für verschiedene Iterationen des Erzeugens und Optimierens des Posen-Graphen auf vorangegangen erzeugte Posen-Graphen zurückgegriffen werden kann.

Zum Beispiel kann die Optimierungstaktrate im Bereich zwischen 0,1 Hz und 100 Hz liegen, bevorzugt im Bereich zwischen 1 Hz und 50 Hz. In verschiedenen Szenerien kann es erstrebenswert sein, die Optimierungstaktrate möglichst konstant zu halten. Dies kann es ermöglichen, dass nachgeschaltete Logik wie insbesondere die Fahrerassistenzfunktionalität besonders zuverlässig betrieben bzw. gesteuert werden kann.

Durch das Verwenden des Posen-Graphen kann ein besonders effizientes Optimieren zum Erhalten der geschätzten Position der Maschine implementiert werden. Deshalb können vergleichsweise hohe Optimierungstaktraten gewählt werden. Dadurch kann die geschätzte Position besonders zügig bestimmt werden.

Es ist zum Beispiel vorzugsweise möglich, dass die Zeitdauer, die zumindest für das Optimieren des Posen-Graphen in den verschiedenen Iterationen benötigt wird, überwacht wird. Dann ist es vorzugsweise möglich, dass die vorgegebene Taktrate und/oder die Anzahl der Zeitpunkte und/oder eine Genauigkeit des Optimierens in Abhängigkeit des Überwachens der Zeitdauer bestimmt wird.

Zum Beispiel kann vorteilhafterweise die Genauigkeit des Optimierens einer Anzahl der Optimierungsiterationen entsprechen. Zum Beispiel kann eine höhere (geringere) Genauigkeit einer größeren Anzahl (geringeren Anzahl) von Optimierungsiterationen entsprechen.

Das Überwachen kann vorzugsweise das wiederholte Messen der Optimierungszeitdauer umfassen. Zum Beispiel kann vorzugsweise die gesamte Zeitdauer überwacht werden, die zum Erzeugen und Optimieren des Posen-Graph benötigt wird. Zum Beispiel wäre es möglich, kleinere (größere) Taktraten und/oder eine kleinere (größere) Anzahl von Zeitpunkten und/oder eine geringere (größere) Genauigkeit des Optimierens zu wählen, wenn das Überwachen eine größere (kleinere) Optimierungszeitdauer indiziert. Kleinere (größere) Taktraten und eine kleinere (größere) Anzahl von Zeitpunkten können in einer kleineren (größeren) Zeitdauer, die zumindest für das Optimieren des Posen-Graph in den verschiedenen Iterationen benötigt wird, resultieren.

Derart können zu lange Optimierungszeitdauern vermieden werden. In anderen Worten kann es vorzugsweise möglich sein, die Optimierungszeitdauer flexibel anzupassen.

Zum Beispiel kann die Taktrate im Bereich von 1 Hz - 1.000 Hz liegen oder im Bereich von 10 Hz - 100 Hz liegen, oder im Bereich von 25 - 50 Hz liegen.

Grundsätzlich ist es möglich, dass zumindest einige der Abtastraten eine Zeitabhängigkeit aufweisen. Z.B. können vorzugsweise zumindest einige der Abtastraten zeitliche Schwankungen aufweisen. In anderen Worten kann es vorteilhafterweise möglich sein, Ausgaben von Positioniersysteme beim Erzeugen des Posen-Graphen zu berücksichtigen, die Positionsdaten nicht mit einer konstanten Abtastrate bereitstellen. Zum Beispiel ist es vorzugsweise möglich, dass zumindest eine der Abtastraten im Bereich von 0,1 Hz - 100 Hz liegt, oder im Bereich 0,5 Hz bis 10 Hz liegt, oder im Bereich von 0,5 Hz bis 2 Hz liegt.

In den verschiedenen hierin beschriebenen Szenarien kann es auch möglich sein, dass die Ausgabe von zumindest einem der Positioniersysteme die zugehörigen Positionsdaten nicht in zeitsequentieller Reihenfolge bereitstellt (engl. out-of-order). Es kann in vorteilhaften Szenarien möglich sein - z.B. im Gegensatz zu Referenzimplementierungen basierend auf einem Kalmanfilter - solche nicht-zeitsequentiell erhaltenen Positionsdaten beim Erzeugen des Posen-Graphen zu berücksichtigen.

Insbesondere kann es zum Beispiel möglich sein, dass zumindest eine der Abtastraten Unterbrechungen aufweist. Zum Beispiel können die Unterbrechungen mehr als zwei Abtastintervalle der entsprechenden Abtastrate umfassen. Zum Beispiel können die Unterbrechungen mehr als 10 Abtastintervalle umfassen. Zum Beispiel können die Unterbrechungen mehr als 100 Abtastintervalle umfassen.

Die Unterbrechungen können Aussetzer darstellen, während welchen keine oder keine belastbaren Positionsdaten des entsprechenden Positioniersystems vorhanden sind.

In anderen Worten kann es also möglich sein, dass Aussetzer beim Bereitstellen von Ausgaben der verschiedenen Positioniersysteme kompensiert werden. Der Posen-Graph kann mit einer flexiblen Anzahl von Ausgaben verschiedener Positioniersysteme erzeugt werden.

Zum Beispiel ist es in vorteilhaften Szenarien möglich, dass die Absolut-Positionsdaten basierend auf der Ausgabe eines ersten Absolut-Positioniersystems jeweils für mehrere Zeitpunkte in einem ersten Zeitintervall ermittelt werden; die Absolut-Positionsdaten können vorzugsweise basierend auf der Ausgabe eines zweiten Absolut-Positioniersystems jeweils für mehrere Zeitpunkte in einem zweiten Zeitintervall ermittelt werden. Das erste Absolut-Positioniersystem kann vorteilhafterweise verschieden von dem zweiten Absolut-Positioniersystem sein. Die Absolut-Positionsdaten können vorzugsweise für die mehreren Zeitpunkte in dem ersten Zeitintervall nicht basierend auf der Ausgabe des zweiten Absolut-Positioniersystems ermittelt werden.

Deshalb kann z.B. das erste Zeitintervall einer Unterbrechung in Bezug auf die Ausgabe des zweiten Absolut-Positioniersystems darstellen. Das Verfahren kann in vorteilhaften Szenarien umfassen: Umschalten zwischen der Ausgabe des ersten Absolut-Positioniersystems und der Ausgabe des zweiten Absolut-Positioniersystems zum Ende des ersten Zeitintervalls.

In verschiedenen bevorzugten Szenarien kann es also möglich sein, dass je nach Zeitpunkt unterschiedliche Ausgaben von Positioniersystemen berücksichtigt werden. Z.B. kann es in vorteilhaften Implementierungen möglich sein, flexibel zwischen den Ausgaben der ersten und zweiten Absolut-Positioniersysteme beim Erzeugen des Posen-Graphen umzuschalten. Das Umschalten kann graduell erfolgen. Insbesondere in Übergangssituationen kann es derart möglich sein, die Position der Maschine mit einer hohen Zuverlässigkeit zu schätzen.

Es ist zum Beispiel vorteilhafterweise möglich, dass zumindest Teile der Roh-Absolut-Positionsdaten und Teile der Roh-Odometrie-Positionsdaten vor dem Erzeugen des Posen-Graphs verworfen werden.

Verwerfen kann vorzugsweise in diesem Zusammenhang bedeuten: kein Berücksichtigen der verworfenen Roh-Odometrie-Positionsdaten und der verworfenen Roh-Absolut-Positionsdaten beim Erzeugen des Posen-Graphs. Verwerfen kann bedeuten: Löschen der verworfenen Roh-Odometrie-Positionsdaten und der verworfenen Roh-Absolut-Positionsdaten aus einem Speicher, z.B. zu einem späteren Zeitpunkt, wenn z.B. keine nicht-zeitsequentiellen Roh-Positionsdaten mehr erwartet werden oder wenn die entsprechenden Roh-Positionsdaten außerhalb eines beim Erzeugen des Posen-Graphs berücksichtigten Zeitfensters liegen.. Das Verwerfen kann einem Aufräumen des Posen-Graphs entsprechen, d.h. alte Einträge werden gelöscht.

Durch das Verwerfen kann erreicht werden, dass der Posen-Graph eine vergleichsweise geringe Größe aufweist. Dadurch kann eine vergleichsweise kurze Optimierungszeitdauer erreicht werden. Dadurch kann erreicht werden, dass die geschätzte Position mit einer hohen Optimierungstaktrate bereitgestellt werden kann. Dadurch kann die Fahrerassistenzfunktionalität mit einer vergleichsweisen hohen Genauigkeit gesteuert werden.

In verschiedenen bevorzugten Szenarien ist es möglich, von Optimierungsiteration zu Optimierungsiteration das Verwerfen verschiedener Teile der Positionsdaten flexibel anzupassen. Dabei können vorzugsweise unterschiedlichste Entscheidungskriterien berücksichtigt werden.

Zum Beispiel kann in vorteilhaften Szenarien das selektive Verwerfen auf einer Zeitdifferenz zwischen der IST-Zeit und einem Zeitstempel der jeweiligen Roh-Absolut-Positionsdaten und der Roh-Odometrie-Positionsdaten basieren. Zum Beispiel können vorteilhafterweise nur solche Roh-Absolut-Positionsdaten und Roh-Odometrie-Positionsdaten berücksichtigt werden, welche aktueller als ein gewisser Zeit-Schwellenwert sind. Zum Beispiel kann die Zeitdifferenz im Bereich von 5 Sekunden bis 1 Stunde liegen, oder im Bereich von 5 Sekunden bis 10 Minuten liegen, oder im Bereich von 5 Sekunden bis 20 Sekunden liegen, oder ca. 10 Sekunden betragen.

Mittels solcher Techniken des Verwerfens basierend auf dem Zeitstempel und der Zeitdifferenz kann erreicht werden, dass solche Positionsdaten, welche nur eine geringe Relevanz für das Bestimmen der geschätzten Position des Kraftfahrzeugs aufweisen, verworfen werden. Relevante Positionsdaten werden beim Erzeugen des Posen-Graphs berücksichtigt. Dadurch kann das Optimieren des Posen-Graphs beschleunigt werden, wobei jedoch die Zuverlässigkeit der geschätzten Position vergleichsweise groß sein kann.

Entsprechend wäre es bevorzugt auch möglich, dass das selektive Verwerfen der Teile der Roh-Odometrie-Positionsdaten auf einer Datendichte der Roh-Odometrie-Positionsdaten im Zeitraum und auf der Taktrate basiert.

In vorteilhaften Implementierungen kann es z.B. möglich sein, dass das Verfahren weiterhin umfasst: für zumindest ein Positioniersystem, Abschätzen eines Werts der zugehörigen Abtastrate basierend auf einer historischen Ausgabe des entsprechenden Positioniersystems. In anderen Worten kann es bevorzugt möglich sein, dass die Abtastrate durch die bereits in einem Speicher gepufferten Positionsdaten - z.B. mit Zeitstempel - abgeschätzt wird. Dadurch kann es möglich werden, flexibel Ausgaben verschiedener Positioniersysteme zu berücksichtigen, ohne dass es notwendig wäre, a-priori die zugehörigen Abtastraten zu kennen. Z.B. kann für das selektive Verwerfen der Teile der Roh-Odometrie-Positionsdaten der geschätzte Wert der Abtastrate berücksichtigt werden.

Zum Beispiel kann es in vorteilhaften Implementierungen möglich sein, dass solche Positionsdaten verworfen werden, die eine wesentlich geringere Datendichte im Zeitraum aufweisen, als die Taktrate. Dies bedeutet, dass solche Roh-Positionsdaten verworfen werden können, welche mit großen Unterbrechungen in Bezug auf die Taktrate vorhanden sind.

In bevorzugten Implementierungen ist es möglich, dass das Löschen der Roh-Positionsdaten aus dem Speicher erst nach einer gewissen Zeitdifferenz in Bezug auf einen assoziierten Zeitstempel der Roh-Positionsdaten erfolgt. Z.B. kann es bevorzugt möglich sein, dass Roh-Positionsdaten, die eine Unterbrechung aufweisen, nicht unmittelbar aus dem Speicher gelöscht werden. Z.B. können entsprechende Roh-Positionsdaten in der aktuellen Iteration nicht zum Erzeugen des Posen-Graphens verwendet werden, aber trotzdem für eine gewisse Zeitdauer in einem Speicher gepuffert werden. Derart kann erreicht werden, dass z.B. verspätet empfangene, nicht-zeitsequentielle Roh-Positionsdaten abgewartet werden, welche die Unterbrechung auffüllen bzw. schließen können. Dann können die entsprechenden Roh-Positionsdaten bei einer späteren Iteration beim Erzeugen des Posen-Graphs berücksichtigt werden.

Dadurch kann ein Einfluss von ungenauen Roh-Positionsdaten auf das Erzeugen und Optimieren des Posen-Graphs und auf das Abschätzen der Position des Kraftfahrzeugs vermieden werden; gleichzeitig kann das Optimieren des Posen-Graphs beschleunigt werden.

Zum Beispiel kann bevorzugt das selektive Verwerfen auf der vorgegebenen Optimierungstaktrate basieren. Zum Beispiel kann in vorteilhaften Szenarien eine größere Anzahl (geringere Anzahl) von Positionsdaten verworfen werden, je größer (kleiner) die Optimierungstaktrate ist.

In verschiedenen hierin beschriebenen bevorzugten Szenarien kann es möglich sein, vergleichsweise alte Positionsdaten zu verwerfen, bis eine Anzahl von Positionsdaten beim Erzeugen des Posen-Graphs berücksichtigt wird, die kleiner oder gleich einer vorgegebenen maximalen Schwellenwertanzahl ist. Derart kann eine Anzahl von Knoten und Kanten, die der Posen-Graph umfasst, begrenzt werden. Dadurch kann erreicht werden, dass der Posen-Graph jeweils nur die jüngere Vergangenheit der Positionsentwicklung des Kraftfahrzeugs abbildet.

In bevorzugten Implementierungen kann es möglich sein, dass der aktuelle Posen-Graph erst basierend auf neu empfangenen, zeitaktuellen Roh-Positionsdaten gegenüber dem in der vorangegangenen Iteration erzeugten Posen-Graph erweitert wird. Dann kann es möglich sein, dass nur derjenige vordere, d.h. zeitaktuellere Abschnitt des Posen-Graphs beibehalten wird, welcher der vorgegebenen Anzahl von Knoten und Kanten entspricht. Andere Knoten und Kanten bzw. assoziierte Roh-Positionsdaten können verworfen werden.

Gemäß einem weiteren Aspekt betrifft die vorliegende Erfindung ein Steuergerät gemäß Anspruch 6.

Für ein solches Steuergerät können Effekte erzielt werden, die vergleichbar sind mit den Effekten, die für das Verfahren gemäß der vorliegenden Erfindung erzielt werden können.

Die oben dargelegten Merkmale und Merkmale, die nachfolgend beschrieben werden, können nicht nur in den entsprechenden explizit dargelegten Kombinationen verwendet werden, sondern können innerhalb des durch die Ansprüche definierten Schutzumfangs auch in weiteren Kombinationen oder isoliert verwendet werden.

KURZBESCHREIBUNG DER FIGUREN

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente.

FIG. 1 ist eine schematische Illustration des logischen Informationsflusses im Rahmen der Fusion von Positionsdaten mehrerer Positioniersysteme auf Grundlage eines Posen-Graphen gemäß verschiedener Ausführungsformen.

FIG. 2 illustriert schematisch die Verfügbarkeit der unterschiedlichen Positionsdaten für Zeitpunkte in unterschiedlichen Zeitintervallen in einer Übergangssituation gemäß verschiedener Ausführungsformen.

FIG. 3 illustriert schematisch die Verfügbarkeit bestimmter Positionsdaten zu verschiedenen Zeitpunkten gemäß verschiedener Ausführungsformen, wobei in FIG. 3 eine Unterbrechung, bei welcher temporär keine Positionsdaten verfügbar sind, illustriert ist.

FIG. 4 illustriert schematisch ein Steuergerät gemäß verschiedener Ausführungsformen.

FIG. 5 ist ein Flussdiagramm eines Verfahrens gemäß verschiedener Ausführungsformen.

FIG. 6 illustriert schematisch das Erzeugen von Knoten eines Posen-Graphen auf Grundlage von Roh-Absolut-Positionsdaten gemäß verschiedener Ausführungsformen, wobei die Roh-Absolut-Positionsdaten von zwei Absolut-Positioniersystemen mit unterschiedlichen Abtastraten empfangen werden.

FIG. 7 illustriert schematisch das Erzeugen von Kanten des Posen-Graphen der FIG. 6 auf Grundlage von Roh-Odometrie-Positionsdaten gemäß verschiedener Ausführungsformen, wobei die Roh-Odometrie-Positionsdaten von einem Odometrie-Positioniersystem mit einer bestimmten Abtastrate empfangen werden.

FIG. 8 illustriert schematisch den Posen-Graph der FIGs. 6 und 7, bevor der Posen-Graph optimiert wird.

FIG. 9 illustriert schematisch den optimierten Posen-Graph der FIGs. 6-8 und illustriert weiterhin eine aus dem optimierten Posen-Graph erhaltene geschätzte Position eines Kraftfahrzeugs.

FIG. 10 illustriert schematisch einen Posen-Graphen mit Kettengeometrie gemäß verschiedener Ausführungsformen.

FIG. 11 illustriert schematisch eine Systemmatrix für den Posen-Graphen der FIG. 10 gemäß verschiedener Ausführungsformen.

FIGs. 12, 13 und 14 illustrieren schematisch einen Posen-Graphen ohne Kettengeometrie.

DETAILLIERTE BESCHREIBUNG VON AUSFÜHRUNGSFORMEN

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden Techniken zur Positionsbestimmung einer Maschine, wie z. B. einem Kraftfahrzeug beschrieben, welche es erlauben, Odometrie-Positionsdaten mindestens eines Odometrie-Positioniersystems und Absolut-Positionsdaten mindestens eines Absolut-Positioniersystems zu fusionieren. Der Einfachheit wegen wird nachfolgend auf ein Kraftfahrzeug Bezug genommen, obwohl entsprechende Techniken auch für andere Maschinen angewendet werden können. Dabei können die nachfolgend beschriebenen Techniken insbesondere für die 2d oder 3d Positionsbestimmung angewendet werden. Z.B. können die Techniken für die 3d Positionsbestimmung eines Flugobjekts, beispielsweise eines autonomen Flugobjekts (Drohne), eingesetzt werden.

Insbesondere werden nachfolgend Techniken geschrieben, welche es erlauben, eine geschätzte Position des Kraftfahrzeugs zu bestimmen, welche für eine Fahrerassistenzfunktionalität verwendet werden kann. Z.B. kann die Fahrerassistenzfunktionalität autonomes Fahren betreffen. Es sind auch andere Fahrerassistenzfunktionalitäten denkbar.

Verschiedene hierin offenbarte Beispiele erlauben es, die Fusion der verschiedenen Positionsdaten auf Grundlage eines Posen-Graphen durchzuführen. Der Posen-Graph kann optimiert werden, um die Position des Kraftfahrzeugs abzuschätzen.

Dabei werden für jeden von mehreren Zeitpunkten Odometrie-Positionsdaten eines Kraftfahrzeugs basierend auf mindestens einer Ausgabe mindestens eines Odometrie-Positioniersystems ermittelt und weiterhin Absolut-Positionsdaten des Kraftfahrzeugs basierend auf mindestens einer Ausgabe mindestens eines Absolut-Positioniersystems ermittelt. Der Posen-Graph wird erzeugt, wobei Knoten des Posen-Graphen den Absolut-Positionsdaten entsprechen und wobei Kanten des Posen-Graphen den Odometrie-Positionsdaten entsprechen. Der Posen-Graph wird dann optimiert.

Hierin werden auch Techniken beschrieben, die es ermöglichen, den Posen-Graphen effizient und ohne Genauigkeitsverlust zu marginalisieren. Dabei wird ein zu optimierender Knoten durch einen Fixknoten ersetzt.

Beispielen weist der Posen-Graph eine Kettengeometrie auf. Die Kettengeometrie kann eine besonders effiziente Optimierung des Posen-Graphen ermöglichen. Die Kettengeometrie kann z.B. dadurch charakterisiert sein, dass der Posen-Graph keine Verzweigungen aufweist. Dies kann bedeuten, dass Knoten des Posen-Graphen nicht mehr als zwei direkte Nachbarn aufweisen; also z.B. einen ersten Nachbar-Knoten, welcher der Position des Kraftfahrzeugs zu einem vorangegangenen Zeitpunkt entspricht und einen zweiten Nachbar-Knoten, welcher der Position des Kraftfahrzeugs zu einem nachfolgenden Zeitpunkt entspricht. Diese Zeitpunkte können dabei einer Taktrate entsprechen, mit der der Posen-Graph konstruiert wird. Dabei ist es grundsätzlich möglich, dass direkt benachbarte Knoten über eine oder mehrere Kanten miteinander verbunden sind. Z.B. können benachbarte Knoten über mehr als eine Kante verbunden sein, wenn mehr als eine Quelle für Odometrie-Positionsdaten zur Verfügung steht.

Durch das Verwenden der Kettengeometrie für den Posen-Graphen wird also z.B. vermieden, dass - auch bei Verfügbarkeit von mehreren Odometrie-Positionsdaten - Kanten zwischen nicht direkt benachbarten Knoten eingefügt werden. Es kann vermieden werden, dass Knoten des Posen-Graphen übersprungen werden.

Die Kettengeometrie kann durch geeignete Interpolation von Roh-Odometrie-Positionsdaten erzielt werden. Entsprechen z.B. bestimmte Roh-Odometrie-Positionsdaten der Änderung der Position zwischen zwei besonders weit auseinanderliegenden Zeitpunkten, so kann durch Erhöhen der Auflösung im Wege der Interpolation sichergestellt werden, dass lediglich direkt benachbarte Knoten durch die entsprechenden Kanten verbunden sind.

Den hierin beschriebenen Techniken liegt die Erkenntnis zugrunde, dass das Optimieren des Posen-Graphen besonders zügig durchgeführt werden kann, wenn der Posen-Graph die Kettengeometrie aufweist. Es wurde erkannt, dass der Posen-Graph mit Kettengeometrie - z.B. in 2D definiert - einer blockdreidiagonalen Systemmatrix entspricht. Diese kann besonders recheneffizient bei der Optimierung gehandhabt werden.

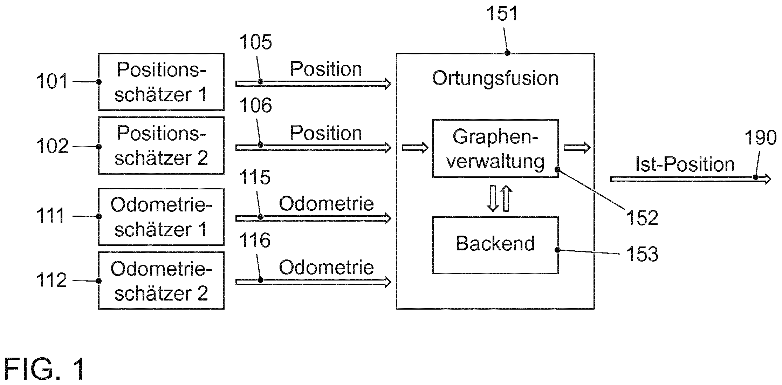

In FIG. 1 sind verschiedene Aspekte in Bezug auf einen Arbeitsablauf zur Positionsbestimmung mittels Sensorfusion illustriert. Es werden Roh-Absolut-Positionsdaten 105, 106 als Ausgaben von zwei Absolut-Positioniersystemen 101, 102 empfangen. Ferner werden Roh-Odometrie-Positionsdaten 115, 116 als Ausgaben von zwei Odometrie-Positioniersystemen 111, 112 empfangen. Zum Beispiel könnte ein Software-Modul 151 die entsprechenden Positionsdaten 105, 106, 115, 116 auf einem dedizierten Ausführungsstrang (engl. thread) empfangen. Ein Speicher (in FIG. 1 nicht gezeigt) kann die empfangenen Positionsdaten 105, 106, 115, 116 zwischenspeichern, bis sie verworfen werden.

Es ist dann möglich, in regelmäßigen, einstellbaren Zeitintervallen - das heißt mit einer Optimierungstaktrate - einen Konstruktionsprozess zum Erzeugen des Posen-Graphen durch eine Graphenverwaltung 152 anzustoßen. Dabei kann zum Beispiel der in einer vorangehenden Iteration der Optimierungstaktrate erzeugte Posen-Graph jeweils um neue Knoten und Kanten erweitert werden.

Der Posen-Graph kann in verschiedenen Szenarien Knoten aufweisen, die in festen Zeitabständen angeordnet sind. Entsprechend ist es möglich, dass mehrere Zeitpunkte, für die Knoten zu dem Posen-Graph hinzugefügt werden, basierend auf einer vorgegebenen Taktrate ermittelt werden. Für jeden der mehreren Zeitpunkte können dann entsprechende Odometrie-Positionsdaten und Absolut-Positionsdaten basierend auf den Roh-Odometrie-Positionsdaten und den Roh-Absolut-Positionsdaten ermittelt werden und jeweils mit zu optimierenden Kanten bzw. Knoten des Posen-Graphen assoziiert werden, z.B. in Form von Randbedingungen. Der Posen-Graph kann eine Kettengeometrie aufweisen.

Z.B. kann die Optimierungstaktrate gleich oder ungleich der Taktrate der Knoten des Posen-Graphen sein.

Nachdem der Posen-Graph erzeugt wurde, kann die Optimierung durchgeführt werden. Dazu wird der erzeugte Posen-Graph an ein Backend 153 übergeben. Das Backend 153 führt dann die Optimierung aus. Als Ergebnis der Optimierung wird eine IST-Position des Kraftfahrzeugs erhalten.

Dabei kann in den verschiedenen hierin offenbarten Szenarien die IST-Position eine Vorhersage für einen zukünftigen Zeitpunkt sein, um Latenzzeiten aufgrund der Erzeugung des Posen-Graphen durch die Graphenverwaltung 152 und das Durchführen der Optimierung durch das Backend 153 zu kompensieren. Zum Beispiel wäre es möglich, dass die IST-Position eine Vorhersage der Position des Kraftfahrzeugs für den nächsten Takt der vorgegebenen Optimierungstaktrate ist.

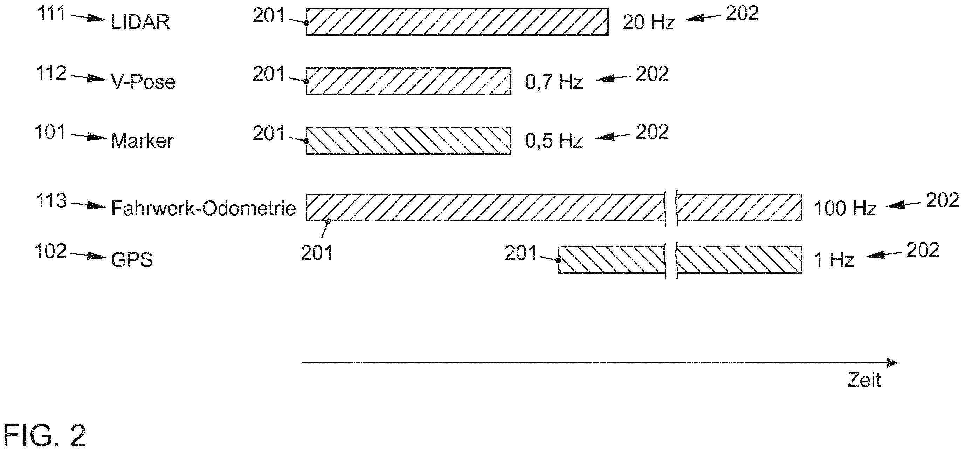

Mittels solcher Techniken zur Positionsbestimmung auf Grundlage des Posen-Graphen ist es möglich, flexibel Positionsdaten 105, 106, 115, 116 zu berücksichtigen, die aus unterschiedlichsten Positioniersystemen 101, 102, 111, 112, 113 stammen, siehe FIG. 2. Dabei ist der konkrete Typ des verwendeten Positioniersystems 101, 102, 111-113 nicht wesentlich für die Funktionsweise der hierin beschriebenen Techniken zur Positionsbestimmung; es können unterschiedlichste Typen und Arten von Positioniersystemen 101, 102, 111-113 in den verschiedenen hierin offenbarten Szenarien verwendet werden. Eine flexible Sensorfusion wird also möglich.

Zum Beispiel können Satelliten-basierte Positioniersysteme zum Bereitstellen der Absolut-Positionsdaten 105, 106 verwendet werden; ein Beispiel ist das Global Positioning System (GPS). Zum Beispiel kann eine Erkennung von maschinenlesbaren Zeichen 101 als Positioniersystem zum Bereitstellen der Absolut-Positionsdaten 105, 106 verwendet werden. Zum Beispiel könnte eine Laser-basierte Abstandsmessung 111 (engl. Light detection and ranging, LIDAR) zum Bestimmen von Absolut-Positionsdaten 105, 106 und/oder Odometrie-Positionsdaten 115, 116 verwendet werden. Auch die visuelle Posenerkennung 112 kann basierend auf Unterschieden in sequentiell aufgenommenen Bildern, die eine Landmarke abbilden, die Odometrie-Positionsdaten 115, 116 bereitstellen. Informationen aus der Fahrwerk-Odometrie 113 können zum Bereitstellen der Odometrie-Positionsdaten 115, 116 verwendet werden; zum Beispiel können in diesem Zusammenhang ein Lenkwinkel und/oder eine Drehgeschwindigkeit der Räder berücksichtigt werden. Es könnten auch Beschleunigungssensoren zum Bereitstellen der Odometrie-Positionsdaten 115, 116 verwendet werden; zum Beispiel könnte ein elektronisches Stabilitätssystem (ESP) als Beschleunigungssensor verwendet werden.

Eine weitere Quelle für die Positionsdaten könnten car2car-Systeme sein: diese können entweder direkt die Position eines Fahrzeugs bestimmen oder eine indirekte Positionsbestimmung über die Position eines dritten Fahrzeugs ermöglichen, wobei dann die Relativpositionierung zum dritten Fahrzeug berücksichtigt werden kann.

Stereo- und/oder Monokameras können nicht nur zur Bereitstellung von Odometrie-Positionsdaten genutzt werden, sondern alternativ oder zusätzlich zur Bereitstellung von Absolut-Positionsdaten. Hierfür gibt es verschiedene Ansätze: es ist z.B. möglich, eine visuelle Karte einer Strecke zu erstellen und beim erneuten Durchfahren eine Lokalisierung in der Karte vorzunehmen.

Techniken der simultanen Lokalisierung und Kartenerstellung (engl. Simultaneous Localization and Mapping, SLAM) können auch als Quelle für Positionsdaten dienen. Z.B. können SLAM-Techniken Absolut-Positionsdaten in einem globalen Koordinatensystem bereitstellen oder alternativ oder zusätzlich Odometrie-Positionsdaten bereitstellen.

Weitere Beispiele für Positioniersysteme umfassen: Techniken basierend auf RFID-Markern. Techniken basierend auf WLAN-Netzen, die aktuell empfangen werden und/oder basierend auf einer Triangulation in einer bekannten WLAN-Netzwerke-Karte. Es können auch Mobilfunkmasten ausgelesen werden.

In den verschiedensten hierin beschriebenen Szenarien kann es jeweils auch möglich sein, durch Differenzbildung von zwei zeitsequentiellen Absolut-Positionsdaten Odometrie-Positionsdaten zu erzeugen.

Aus FIG. 2 ist ersichtlich, dass einerseits die Zeitintervalle 201, in welchen die verschiedenen Positioniersysteme 101, 102, 111-113 die zugehörigen Positionsdaten bereitstellen, verschieden voneinander sind. FIG. 2 stellt eine sogenannte Übergangssituation dar: die von LI DAR 111, der Erkennung von maschinenlesbaren Zeichen 101 und der visuellen Posenerkennung 112 bereitgestellten Positionsdaten 105, 106, 115, 116 brechen ab; dafür werden Positionsdaten des GPS-Systems 106 verfügbar. Eine entsprechende Situation kann sich zum Beispiel beim Verlassen eines Parkhauses ergeben. Dies bedeutet, dass zunächst die Absolut-Positionsdaten 105 aus der Erkennung maschinenlesbarer Zeichen 101 erhalten werden und nicht von dem GPS-System 106; anschließend werden die Absolut-Positionsdaten 106 von dem GPS-System 102 erhalten. In den verschiedenen hierin beschriebenen Szenarien kann also zwischen unterschiedlichen Quellen für die Positionsdaten 105, 106, 115, 116 umgeschaltet werden; dies bedeutet, dass in den verschiedenen hierin beschriebenen Szenarien zwischen den unterschiedlichen Positioniersysteme 101, 102, 111-113 umgeschaltet werden kann. Das Umschalten kann graduell erfolgen. Das Umschalten kann Situationsangepasst erfolgen. Das Umschalten kann unter Berücksichtigung von Übergangsphasen zwischen den verschiedenen Positioniersystemen erfolgen.

In FIG. 2 ist ferner illustriert, dass sich die Abtastraten 202, mit welchen die verschiedenen Positioniersysteme 101, 102, 111-113 die zugehörigen Roh-Positionsdaten bereitstellen, voneinander abweichen.

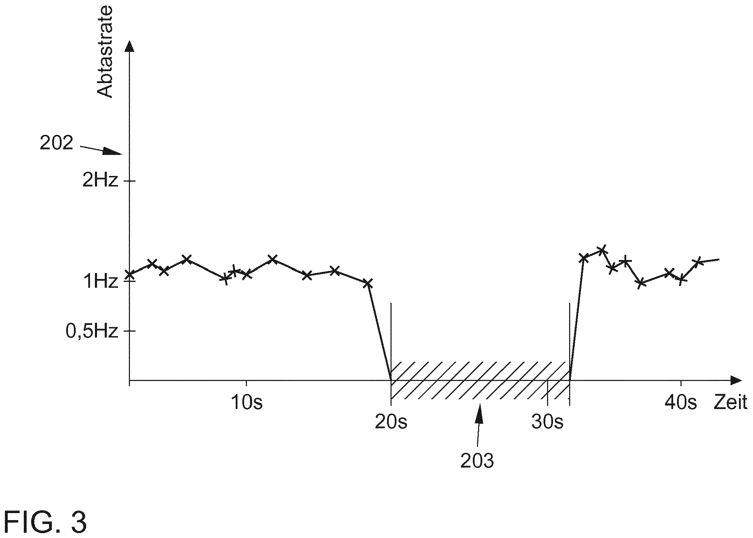

In verschiedenen Szenarien ist es auch möglich, dass die Abtastrate 202 eine Unterbrechung 203 aufweist, siehe FIG. 3. In FIG. 3 ist die Abtastrate 202 als Funktion der Zeit aufgetragen. In einem solchem Szenario ist es möglich, dass während der Unterbrechung 203 das entsprechende Positioniersystem 101, 102, 111-113 keine oder keine signifikanten Ausgaben bereitstellt. Eine Unterbrechung 203 kann insbesondere dann vorliegen, wenn wesentlich weniger Roh-Positionsdaten bereitstehen, als durch eine Taktrate, mit der Knoten in den Posen-Graphen eingefügt werden, gefordert. Kurze Unterbrechungen 203 können kompensiert werden, beispielsweise durch Interpolation. Grundsätzlich ist es aber möglich, dass die Unterbrechung 203 vergleichsweise lang ist. Zum Beispiel kann die Unterbrechung 203 mehrere Abtastintervalle der Abtastrate 202 umfassen. In dem Szenario der FIG. 3 beträgt die Abtastrate 202 in etwa 1 Hz vor und nach der Unterbrechung 203. Dies bedeutet, dass ein Abtastintervall eine Länge von ca. 1 Sekunde aufweist. Die Unterbrechung 203 weist eine Zeitdauer von ca. 12 Sekunden auf, umfasst also mehr als 10 Abtastintervalle.

Grundsätzlich ist es auch möglich, dass die Abtastrate 202 - außerhalb einer Unterbrechung 203 - als Funktion der Zeit variiert. Zum Beispiel könnte je nach verfügbarer Signalqualität das Satelliten-basierte Positionssystem 106 eine höhere oder geringere Abtastrate 202 implementieren.

Nachfolgend werden Techniken beschrieben, um die IST-Position 190 des Kraftfahrzeugs durchgängig und zuverlässig mit einer hohen Genauigkeit zu bestimmen. Diese Techniken können auch in Übergangssituationen oder bei voneinander abweichenden bzw. mit Unterbrechungen 203 versehenen Abtastraten 201 zuverlässig und genau die IST-Position 190 bestimmen.

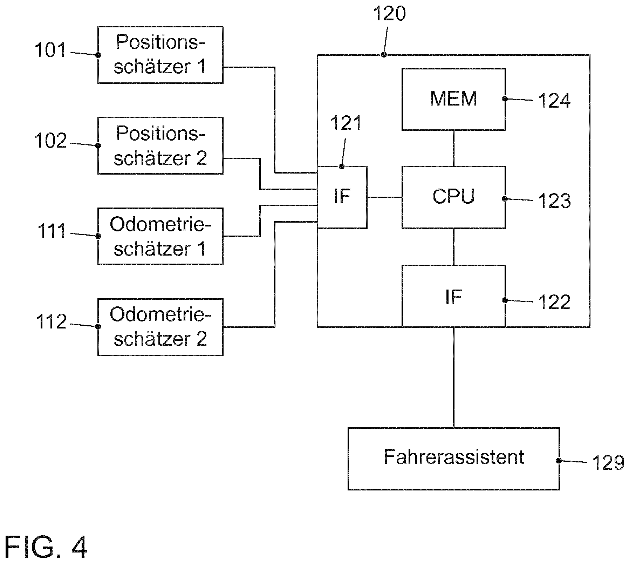

FIG. 4 illustriert ein Steuergerät 120 welches zum Durchführen entsprechender Techniken eingerichtet ist. Das Steuergerät 120 umfasst eine Schnittstelle 121, welche mit den verschiedenen Positioniersystemen 101, 102, 111, 112 kommuniziert. Ferner umfasst das Steuergerät 120 einen Prozessor 123, der mit der Schnittstelle 121 und einem Speicher 124 gekoppelt ist. Zum Beispiel kann der Speicher 124 die verschiedenen Positionsdaten 105, 106, 115, 116 zwischenspeichern bzw. puffern. Der Prozessor 123 kann eingerichtet sein, um verschiedenste Techniken, die hierin im Zusammenhang mit dem Ermitteln der Odometrie-Positionsdaten und der Absolut-Positionsdaten auf Grundlage jeweils der Roh-Odometrie-Positionsdaten und der Roh-Absolut-Positionsdaten, dem Erzeugen des Posen-Graphen insbesondere mit Kettengeometrie und dem Optimieren des Posen-Graphen, sowie dem Steuern der Fahrerassistenzfunktionalität beschrieben sind, durchzuführen. Zum Steuern der Fahrerassistenzfunktionalität 129 umfasst das Steuergerät 120 eine weitere Schnittstelle 122. Die verschiedenen Schnittstellen 121, 122 können eingerichtet sein, um zum Beispiel über ein Bus-System des Kraftfahrzeugs mit den verschiedenen Einheiten zu kommunizieren. Es sind auch direkte Datenverbindungen möglich.

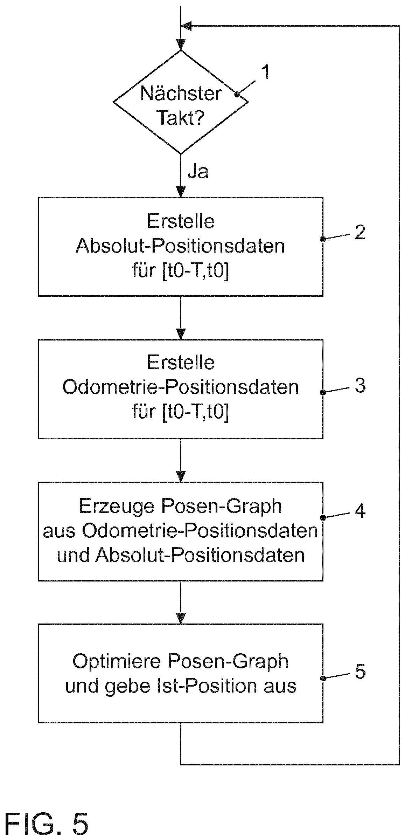

Zum Beispiel können in dem Speicher 124 Steuerdaten hinterlegt sein, die von dem Prozessor 123 ausgeführt werden können. Ausführen der Steuerdaten durch den Prozessor 123 kann bewirken, dass der Prozessor 123 ein Verfahren ausführt, wie es im Zusammenhang mit dem Flussdiagramm der FIG. 5 illustriert ist.

Zunächst wird in Schritt 1 überprüft, ob die nächste Iteration für das Erzeugen und Optimieren eines Posen-Graphen durchgeführt werden soll; dafür kann eine vorgegebene Optimierungstaktrate berücksichtigt werden. Für jede Iteration wird eine IST-Position 190 erhalten.

Optional kann in allen hierin beschriebenen Beispielen für jede Iteration auch eine IST-Odometrie erhalten werden. Z.B. kann es möglich sein, die IST-Odometrie auf Grundlage der beiden letzten Optimierungsknoten zu berechnen, d.h., unter Berücksichtigen der zurückgelegten Strecke und der erfolgten Drehung. Daraus kann z.B. auf die Geschwindigkeit und die Drehrate zurückgeschlossen werden.

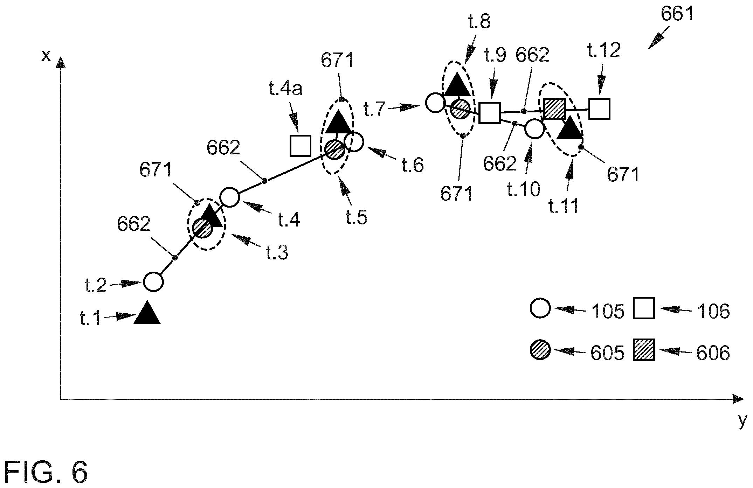

Wenn die nächste Iteration durchgeführt werden soll, werden in Schritt 2 zunächst für mehrere Zeitpunkte Absolut-Positionsdaten auf Grundlage von Roh-Absolut-Positionsdaten 105, 106 ermittelt. Dies ist in FIG. 6 illustriert. In FIG. 6 ist der Posen-Graph 661 lediglich in Bezug auf Knoten 671 illustriert. Der Posen-Graph 661 ist in FIG. 6 im zweidimensionalen xy-Ortsraum dargestellt. In anderen Beispielen wäre es auch möglich, dass der Posen-Graph 661 im 3D Raum definiert ist. Der Posen-Graph 661 umfasst Knoten 671 zu den Zeitpunkten t.1, t.3, t.5, t.8 und t.11. Die Zeitpunkte t.1, t.3, t.5, t.8 und t.11 weisen einen festen Zeitabstand zueinander auf und sind entsprechend einer Taktrate bestimmt.

In den verschiedenen hierin offenbarten Szenarien können unterschiedlichste Taktraten berücksichtigt werden. Zum Beispiel kann die Taktrate im Bereich von 1 Hz bis 1000 Hz liegen, bevorzugt im Bereich von 10 Hz bis 100 Hz, besonders bevorzugt im Bereich von 25 Hz bis 50 Hz. Derart kann die IST-Position zügig und mit einer hinreichend hohen Zuverlässigkeit bestimmt werden.

In den verschiedenen hierin offenbarten Szenarien ist es möglich, dass die Taktrate veränderlich ist und flexibel bestimmt wird. Zum Beispiel kann eine höhere Taktrate einer größeren Anzahl von Knoten 671 entsprechen, sodass wiederum die Optimierungszeitdauer zunimmt; deshalb kann es erstrebenswert sein, in Abhängigkeit von einem Überwachen der Optimierungszeitdauer die Taktrate zu bestimmen. Derart kann eine bestimmte Optimierungstaktrate auch für rechenintensive Posen-Graphen 661 gewährleistet werden.

Die Knoten 671 entsprechen den Absolut-Positionsdaten 605, 606 (in FIG. 6 mit gestricheltgefüllten Kreisen und Quadraten dargestellt). Die Absolut-Positionsdaten 605, 606 bilden insbesondere Randbedingungen für die Knoten 671. Die Absolut-Positionsdaten 605, 606 werden basierend auf den Roh-Absolut-Positionsdaten 105, 106 bestimmt. Dabei werden die Roh-Absolut-Positionsdaten 105, 106 mit Abtastraten erhalten, die sich von der Taktrate unterscheiden; z.B. werden Roh-Absolut-Positionsdaten 105, 106 zu den Zeitpunkten t.2, t.4, t.4a, t.6, t.7, t.9, t.10 und t.12 erhalten. Die Roh-Absolut-Positionsdaten 105, 106 weisen entsprechende Zeitstempel auf.

Deshalb werden die Roh-Absolut-Positionsdaten 105, 106 zum Erhalten der Absolut-Positionsdaten 605, 606 interpoliert (in FIG. 6 durch die durchgezogenen Linien 662 dargestellt). Zum Beispiel werden die Roh-Absolut-Positionsdaten 105 zu den Zeitpunkten t.2 und t.4 zum Erhalten der Absolut-Positionsdaten 605 zum Zeitpunkt t.3 interpoliert. Die Interpolation stellt also eine Schätzung dar, wo das entsprechende Positioniersystem zum Zeitpunkt t.3 das Kraftfahrzeug vermutet hätte.

Alle Zeitpunkte t.1-t.13 liegen innerhalb des Zeitfensters [t0-T; t0], wobei t0 die IST-Zeit darstellt. T bezeichnet eine Zeitdifferenz. Roh-Absolut-Positionsdaten 105, 106, die nicht innerhalb dieses Zeitfensters liegen, werden verworfen, d.h. nicht in den Posen-Graph 661 übernommen und z.B. aus dem Speicher gelöscht. Dadurch kann die Menge der Knoten 671 des Posen-Graphen 661 begrenzt werden; dadurch wird die zum Optimieren benötigte Zeitdauer reduziert. Gleichzeitig wird die jüngere Vergangenheit der Posen des Kraftfahrzeugs berücksichtigt, so dass die Zuverlässigkeit, mit der die IST-Position 190 abgeschätzt werden kann, vergleichsweise hoch ist.

In manchen Szenarien kann es vorkommen, dass z.B. Odometrie-Positioniersysteme, die Ausgaben mit einer vergleichsweise sehr hohen Abtastrate bereitstellen, Messungen durchführen, die gegenüber dem Zeithorizont t0 in der Zukunft liegen. Dies kann aufgrund einer internen Vorhersage des Odometrie-Positioniersystems vorkommen. Es ist möglich, entsprechende Roh-Odometrie-Positionsdaten beim Erzeugen des Posen-Graphen 661 zu berücksichtigen.

Ferner werden die Roh-Absolut-Positionsdaten 105, 106 basierend auf einer Datendichte der Roh-Absolut-Positionsdaten 105, 106 im Zeitraum und basierend auf der Taktrate selektiv verworfen. Zum Beispiel sind im Zeitbereich t.1-t.6 nur sehr wenige Roh-Absolut-Positionsdaten 106 vorhanden - insbesondere im Vergleich zur Taktrate. Deshalb werden die Roh-Absolut-Positionsdaten 106 zum Zeitpunkt t.4a verworfen und beim Erzeugen des Posen-Graphen 661 nicht als Randbedingung z.B. für die Knoten 671 zu den Zeitpunkten t.3 oder t.5 berücksichtigt.

In anderen Beispielen können auch die Positionsdaten 106 zum Zeitpunkt t.4a zunächst im Speicher gepuffert verbleiben, aber nicht für das Erzeugen des Posen-Graphen 661 in der gegenwärtigen Iteration berücksichtigt werden. Das Löschen aus dem Speicher kann in einer späteren Iteration erfolgen, sofern keine nicht-zeitsequentiellen Positionsdaten 106 mehr erhalten werden.

In verschiedenen weiteren Szenarien wäre es zum Beispiel möglich, dass das selektive Verwerfen der verschiedenen Roh-Absolut-Positionsdaten 105, 106 auf der vorgegebenen Optimierungstaktrate basiert; zum Beispiel könnte für höhere (niedrigere) Optimierungstaktrate und eine größere (kleinere) Anzahl von Roh-Absolut-Positionsdaten 105, 106 verworfen werden.

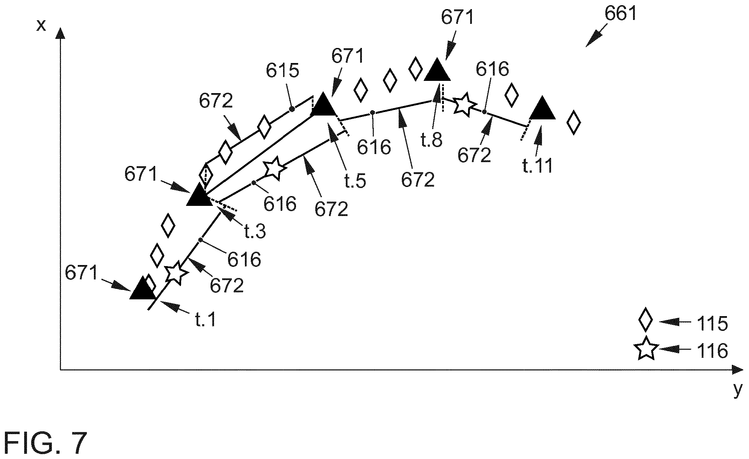

Wieder Bezug nehmend auf FIG. 5, werden in Schritt 3 Odometrie-Positionsdaten ermittelt. Entsprechende Aspekte sind in Bezug auf FIG. 7 illustriert. In FIG. 7 sind die aus den Roh-Absolut-Positionsdaten 105, 106 ermittelten Knoten 671 dargestellt, die den Absolut-Positionsdaten 605, 606 entsprechen (wobei in FIG. 7 aus Gründen der Übersichtlichkeit die entsprechenden Randbedingungen nicht illustriert sind).

Ferner sind in FIG. 7 Roh-Odometrie-Positionsdaten 115 (Diamant-Symbol in FIG. 7) dargestellt, die mit einer vergleichsweise hohen Abtastrate erhalten werden; die Abtastrate ist größer als die Taktrate. Weil die Roh-Odometrie-Positionsdaten 115 mit der besonders hohen Abtastrate empfangen werden, werden diese auf die Taktrate interpoliert. Die Roh-Odometrie-Positionsdaten 115 werden also durch Interpolation in Odometrie-Positionsdaten 615, die den Kanten 672 des Posen-Graphen 661 entsprechen, überführt. Aus dem Beispiel der FIG. 7 ist ersichtlich, dass das Interpolieren der Roh-Odometrie-Positionsdaten 115 einer Verringerung der Zeitauflösung der derart ermittelten Odometrie-Positionsdaten 615 gegenüber den Roh-Odometrie-Positionsdaten 115 entspricht (die entsprechenden Kanten 672 sind länger als die Abstände zwischen zeitlich benachbarten Roh-Odometrie-Positionsdaten 115). Dadurch wird erreicht, dass benachbarte Knoten 671 des Posen-Graphen 661 jeweils nur über eine entsprechende Kante 672, die den Odometrie-Positionsdaten 615 entspricht, verbunden sind. Dadurch wird die Kettengeometrie des Posen-Graphen 661 möglich.

In dem Beispiel der FIG. 7 sind weiterhin weitere Roh-Odometrie-Positionsdaten 116 (Stern-Symbol in FIG. 7) dargestellt, die mit einer vergleichsweisen geringen Abtastrate erhalten werden; diese Abtastrate ist kleiner als die Taktrate. Weil die Roh-Odometrie-Positionsdaten 116 mit einer besonders geringen Abtastrate empfangen werden, werden diese auf die Taktrate interpoliert. Die Roh-Odometrie-Positionsdaten 116 werden also wiederum durch Interpolation in Odometrie-Positionsdaten 616, die den Kanten 672 des Posen-Graphen 161 entsprechen, überführt. Aus dem Beispiel der FIG. 7 ist ersichtlich, dass das Interpolieren der Roh-Odometrie-Positionsdaten 116 einer Verringerung der Zeitauflösung der derart ermittelten Odometrie-Positionsdaten 616 gegenüber den Roh-Odometrie-Positionsdaten 116 entspricht (die entsprechenden Kanten 672 sind kürzer als die Abstände zwischen zeitlich benachbarten Roh-Odometrie-Positionsdaten 116). Dadurch wird jedoch erreicht, dass die entsprechenden Kanten 672 des Posen-Graphen 661 keine Knoten 671 des Posen-Graphen 661 überspringen. Dadurch wird eine Kettengeometrie des Posen-Graphen 671 möglich, da Verzweigungen vermieden werden.

Entsprechende Techniken, die obenstehend in Bezug auf das Verwerfen von Roh-Absolut-Positionsdaten 105, 106 offenbart sind, können auch auf die Roh-Odometrie-Positionsdaten 115, 116 angewendet werden.

Wieder Bezug nehmend auf FIG. 5, wird anschließend in Schritt 4 der Posen-Graph 661, d.h. die Knoten 671 und Kanten 672, auf Grundlage der in Schritten 2 und 3 erzeugten Positionsdaten 105, 106, 115, 116 erzeugt. Dazu werden die zu optimierenden Knoten 671 in gemäß der vorgegeben Taktrate bestimmten, zeitlich festen Abständen eingefügt.

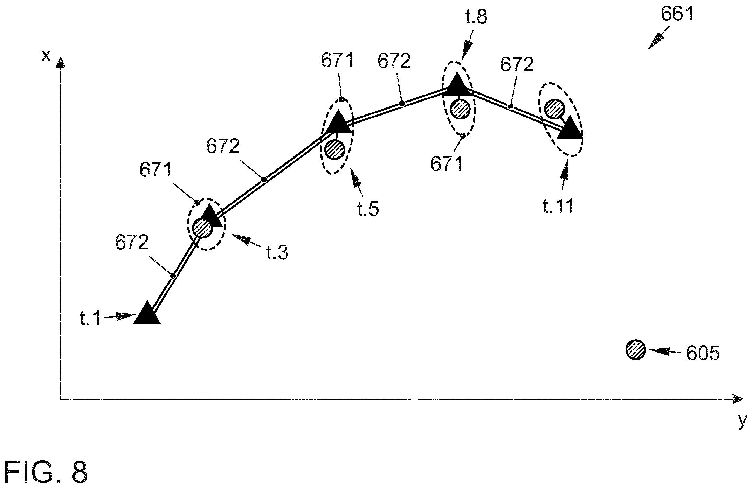

In FIG. 8 ist der zu optimierende Posen-Graph 661 dargestellt; insbesondere ist in Bezug auf die Knoten 671 durch die Verbindung zwischen den schematisch illustrierten Absolut-Positionsdaten 605 und den Optimierungsknoten 671 der Aspekt der Randbedingung grafisch illustriert.

In dem Beispiel der FIG. 8 weist der Posen-Graph 661 eine Kettengeometrie auf. Dies bedeutet, dass kein Knoten 671 mehr als zwei direkt benachbarten Knoten aufweist. Die direkten benachbarten Knoten sind z.B. in Bezug auf Verbindungen zwischen den Knoten 671 über ein oder mehrere Kanten 672 definiert. Insbesondere ist kein Knoten 671 über mehr als vier Kanten mit den jeweiligen direkt benachbarten Knoten 671 verbunden. Dies ist der Fall, da zwischen direkt benachbarten Knoten 671 jeweils zwei Kanten 672 implementiert sind, die den beiden Odometrie-Positionsdaten 615, 616 entsprechen (vergleiche FIG. 7). Im Allgemeinen ist es möglich, dass kein Knoten 641 über mehr als 2 N mit den jeweilig direkt benachbarten Knoten 641 verbunden ist, wobei N die Anzahl der Ausgaben der Odometrie-Positioniersysteme 111, 112 bezeichnet. Außerdem verbindet keine Kante 672 mehr als zwei Knoten 671.

Der Posen-Graph 661 mit Kettengeometrie aus FIG. 8 weist keine Verzweigungen auf. Aufgrund der Kettengeometrie des Posen-Graph 661 weist die entsprechende Systemmatrix eine blockdreidiagonale Form auf. Dies kann eine besonders recheneffiziente Optimierung ermöglichen, weswegen die Optimierungszeitdauer besonders gering sein kann.

Ziel der Optimierung ist es, unter Berücksichtigung der Randbedingungen eine entsprechende Fehlerfunktion global zu minimieren. Die Kanten 672 bilden auch Randbedingungen für die Optimierung der Knoten 671. Der Graph 661 wird zur Optimierung an das Backend 153 übergeben.

Wieder Bezug nehmend auf FIG. 5: anschließend wird in Schritt 5 der Posen-Graph 661 optimiert. Dann kann angenommen werden, dass der optimierte Posen-Graph 661 einen bestmöglichen Kompromiss aus den verschiedenen Positionsdaten 105, 106, 115, 116 der zu fusionierenden Positioniersysteme 101, 102, 111-113 darstellt.

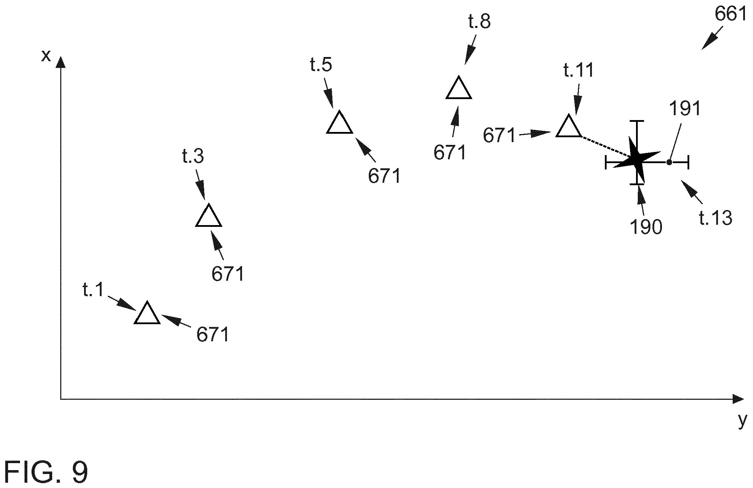

In FIG. 9 sind Aspekte des optimierten Posen-Graph 661 dargestellt. In FIG. 9 sind die nunmehr optimierten Knoten 671 dargestellt, sowie die abgeschätzt IST-Position 190 des Kraftfahrzeugs. Aus FIG. 9 ist ersichtlich, dass die IST-Position 190 für den zukünftigen Zeitpunkt t.13 vorhergesagt wird (in FIG. 9 durch die gepunktete Linie illustriert). Dadurch kann eine Latenzzeit für das Optimieren des Posen-Graphen 661 kompensiert werden. Durch die Vorhersage der IST-Position 190 kann erreicht werden, dass zu Beginn einer nächsten Iteration gemäß Schritt 1 der FIG. 5 bereits eine aktuelle Abschätzung der Position 190 vorliegt.

Zur Vorhersage der IST-Position 190 kann in verschiedenen Beispielen eine Interpolation der letzten beiden optimierten Knoten 671 erfolgen. Daraus kann eine Eigenbewegung des Kraftfahrzeugs bestimmt werden und optional ausgegeben werden. Unter der Annahme, dass sich das Kraftfahrzeug in naher Zukunft genauso verhält, wie in der letzten bekannten Vergangenheit, wird diese Eigenbewegung an den jüngsten optimierten Knoten 671 per Vektoraddition angehangen.

Die IST-Position 190 wird mit einer bestimmten Genauigkeit bestimmt, welche invers proportional zu einer Zuverlässigkeit 191 (in FIG. 9 mittels der Fehlerbalken illustriert) ist. Die Zuverlässigkeit 191 kann auch zum Steuern der Fahrerassistenzfunktionalität 129 berücksichtigt werden.

Aus Obenstehenden ist ersichtlich, dass die Optimierungstaktrate aktiv gesteuert werden kann. Zum Beispiel kann es möglich sein, diejenige Zeit zu überwachen, die pro Iteration benötigt wird, um den Posen-Graph 661 zu erzeugen und zu optimieren, die IST-Position zu bestimmen und den Posen-Graph 661 durch Verwerfen alter Roh-Positionsdaten 105, 106, 115, 116 aufzuräumen. Die überwachte Zeitdauer kann angepasst werden, indem unterschiedlichste Parameter verändert werden: zum Beispiel die Anzahl der Optimierungsiterationen und/oder die Anzahl der Knoten 671.

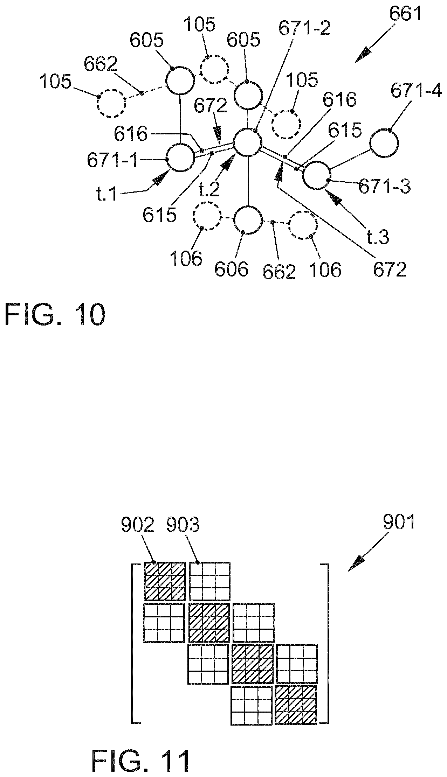

FIG. 10 illustriert einen Posen-Graphen 661, der mittels der voranstehend beschriebenen Techniken bestimmt werden kann. Der Posen-Graph 661 weist mehrere Knoten 671-1 - 671-4 auf, die in einem festen zeitlichen Abstand zueinander an den Zeitpunkten t.1, t.2 und t.3 angeordnet sind. Der Posen-Graph 661 hat eine Kettengeometrie.

Den verschiedenen Knoten 671-1 - 671-4 sind jeweils Absolut-Positionsdaten 605, 606 zugeordnet; diese Zuordnung kann in Form von Randbedingungen erfolgen (in FIG. 10 durch die vertikalen Linien dargestellt). Die Absolut-Positionsdaten 605, 606 entsprechen dabei Fixknoten, da ihre Position im Rahmen der Optimierung des Posen-Graphen 661 nicht verändert wird. Dabei können Techniken der Interpolation angewendet werden; Roh-Absolut-Positionsdaten 105, 106 können auf die Absolut-Positionsdaten 605, 606 abgebildet werden, die an den Zeitpunkten t.1, t.2 und t.3 angeordnet sind, die den zu optimierenden Knoten 671-1 - 671-4 entsprechen. Anschließend können die Kanten 672 des Posen-Graphen 661 erzeugt werden, z.B. basierend auf den Odometrie-Positionsdaten 615, 616.

FIG. 11 illustriert Aspekte in Bezug auf eine Systemmatrix 901 für den Posen-Graphen 661 der FIG. 10 mit Kettengeometrie. Die Systemmatrix 901, H ist die diejenige Matrix, die während der Optimierung invertiert wird, zum Beispiel mittels eines Gauss-Newton-Verfahrens oder eines Levenberg-Marquardt-Verfahrens. Dies kann dem Lösen folgender Gleichung entsprechen:

$$H\Delta x = -b \tag{1}$$

wobei $\Delta x$ den Aktualisierungsvektor und b den Koeffizientenvektor bezeichnet. Typischerweise wird die Lösung der Gleichung 1 durch Invertieren schneller, wenn die Systemmatrix 901 dünn besetzt ist.

Die Systemmatrix 901 umfasst Diagonaleinträge 902, welche von den Absolut-Positionsdaten 605, 606 und den Odometrie-Positionsdaten 615, 616 jeweils als Randbedingungen beeinflusst werden. Die Nicht-Diagonaleinträge 903 werden nur von den Odometrie-Positionsdaten 615, 616 als Randbedingungen beeinflusst.

FIG. 11 ist ersichtlich, dass die Systemmatrix 901 keine Einträge aufweist, die besonders weit von der Hauptdiagonalen entfernt sind. Die Einträge der Systemmatrix 901 sind allesamt um die Hauptdiagonale gruppiert. Oftmals wird ein solches Szenario, bei dem die verschiedenen Einträge der Systemmatrix 901 nicht weit von der Hauptdiagonalen entfernt sind, als Bandmatrix bezeichnet. Eine spezielle Form der Bandmatrix ist die blockdreidiagonale Form. Dabei kann das Band aus Blöcken etwa der Größe 3×3 bestehen. Die blockdreidiagonale Geometrie resultiert aus der Kettengeometrie des Posen-Graphen 661 (vgl. FIG. 10). Die blockdreidiagonale Systemmatrix 901 kann also in verschiedene Blöcke zerlegt werden, wie in FIG. 11 schematisch dargestellt. Dabei weist die blockdreidiagonale Systemmatrix 901 Blöcke z.B. nur in den beiden direkt an die Hauptdiagonale angrenzenden Diagonalen auf. Die blockdreidiagonale Matrix kann also einer dreidiagonalen Matrix entsprechen, die aber anstatt von einzelnen Einträgen auf den ersten Nebendiagonalen oberhalb und unterhalb der Hauptdiagonale Blockeinträge aufweist. Manchmal wird die blockdreidiagonale Matrix auch als blocktridiagonal bezeichnet.

Sofern neue Knoten 671 jeweils dann eingefügt werden, wenn neue Absolut-Positionsdaten 605, 606 und/oder neue Odometrie-Positionsdaten 615 verfügbar sind, resultiert eine verzweigte Struktur des Posen-Graphen 661 und damit auch eine verzweigte Struktur der Systemmatrix 901. Deshalb ist es in verschiedenen Ausführungsformen erstrebenswert, von Zeit zu Zeit eine Marginalisierung des Posen-Graphen 661 durchzuführen. Dabei kann ein Fixknoten als Ersatz für einen ausgewählten bisherigen Knoten verwendet werden kann. Der Fixknoten kann beispielsweise die gleiche Information beinhalten wie das Schur-Komplement. Gleichzeitig kann ein solcher Fixknoten den Vorteil aufweisen, dass dieser Fixknoten explizit im Design des Posen-Graphen 661 wiedergefunden werden kann und dadurch gezielt manipuliert werden kann. Der Fixknoten kann eine Position aufweisen, die abweicht von der Position des gelöschten Knotens.

Herkömmlicherweise wird das Schur-Komplement auf die Gleichung 1 angewendet, um Zustandsvariablen aus dem Optimierungsproblem zu entfernen. Im Posen-Graphen 661 entspricht diese Operation dem Entfernen des entsprechenden Knoten 671. Durch das Schur-Komplement ist sichergestellt, dass vor und nach der Anwendung die restlichen Knoten 671 den gleichen Schätzwert behalten. Würde man die Zustandsvariablen einfach löschen, hätte man einen anderen Schätzwert; dies bedeutet, dass das einfache Entfernen eines Knoten 671 die Abschätzung für die Position des Fahrzeugs verfälschen würde. Der Zustandsvektor besteht in einem Zeitfenster-Verfahren aus m Zustandsvariablen.

Aus Obenstehendem ist ersichtlich, dass der Posen-Graph 661 durch Bestimmen ein Fixknotens marginalisiert werden kann. In einem Beispiel kann dabei derjenige Knoten für die Marginalisierung ausgewählt, der dem ältesten Zeitpunkt t.1 entspricht. In anderen Fällen könnte jedoch auch ein anderer Knoten 671 ausgewählt werden.

Das Marginalisieren des Posen-Graphen kann dabei durch die Kettengeometrie gefördert werden. Dies wird im Zusammenhang mit dem Beispiel der FIGs. 10 und 11 nachfolgend näher erläutert. Würde man Beispiel in dem Posen-Graphen 661 der FIG. 10 den Knoten 671-2 marginalisieren wollen, würde das zu einer Verknüpfung der Knoten 671-1 und 671-3 führen. Falls der älteste Knoten, also in dem Beispiel der FIG. 10 der Knoten 671-1, marginalisiert wird, wird im Falle des Posen-Graphen 661 mit der Kettengeometrie keine zusätzliche Verbindung zwischen den existierenden Knoten 671-2-671-4 geschaffen. Dadurch bleibt die Kettenstruktur erhalten. Für den Falle eines Posen-Graphen ohne Kettenstruktur könnte zum Beispiel auch der Knoten 671-1 auch mit dem Knoten 671-4 durch eine Kante verbunden sein (in Fig. 10 nicht gezeigt). In einem solchen Fall würde das Marginalisieren des Knotens 671-1 zu einer Verbindung des Knotens 671-2 mit Knoten 671-4 führen. Daraus ist ersichtlich, dass bei wiederholter Marginalisierung bei beliebig angeordneten Kanten 672 des Posen-Graphen 661 der Graph 661 dichter und dichter besetzt wird. Daraus resultiert eine Struktur der Systemmatrix 901, die nicht mehr dünn besetzt ist. Dadurch wird typischerweise die Optimierungszeitdauer verlängert.

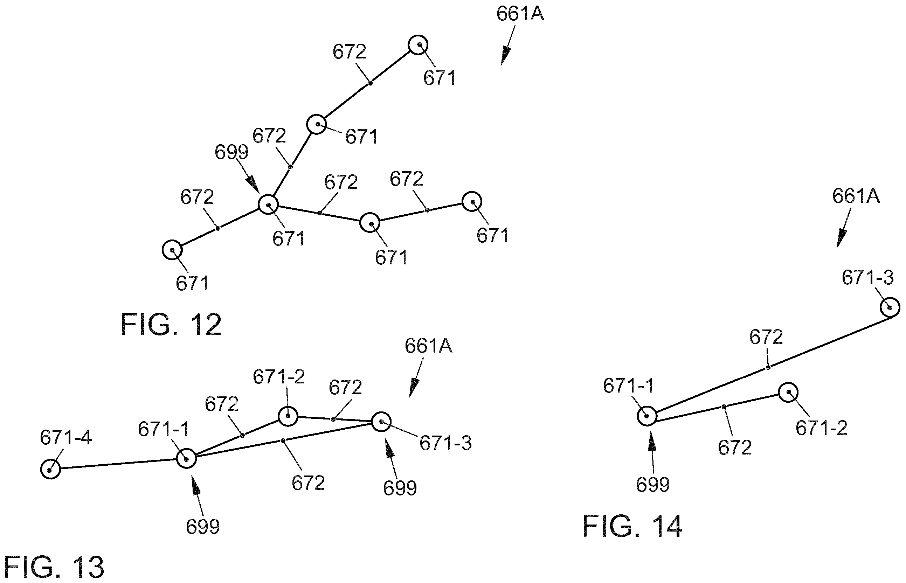

FIG. 12 illustriert Aspekte in Bezug auf einen Posen-Graphen 661A, der keine Kettenstruktur aufweist. Insbesondere weist der Posen-Graph 661A eine Verzweigung 699 auf. Die Verzweigung 699 verbindet dabei drei Arme des Posen-Graphen 661A miteinander. Ein Posen-Graph 661A mit einer Kettengeometrie weist typischerweise keine Verzweigungen 699 auf.

FIG. 13 illustriert Aspekte in Bezug auf einen Posen-Graphen 661A, der keine Kettenstruktur aufweist. In dem Beispiel der FIG. 13 hat der Knoten 671-1 drei direkte Nachbarn, nämlich die Knoten 671-2, 671-3 und 671-4. Eine solche Situation kann beispielsweise auftreten, wenn Roh-Odometrie-Positionsdaten mit einer vergleichsweise langsamen Abtastrate erhalten werden und keine geeignete Interpolation zum Ermitteln der entsprechenden Odometrie-Positionsdaten, die der Kante 672 zwischen den Knoten 671-1, 671-3 entsprechen, durchgeführt wird. Ein Posen-Graph mit einer Kettengeometrie weist typischerweise keine Knoten auf, die mehr als zwei direkte Nachbarn aufweisen.

FIG. 14 illustriert Aspekte in Bezug auf einen Posen-Graphen 661A, der keine Kettenstruktur aufweist. In dem Beispiel der FIG. 14 ist eine Kante 672 mit mehr als zwei Knoten 671-1, 671-2, 671-3 verbunden. Ein Posen-Graph mit einer Kettengeometrie weist typischerweise keine Kanten auf, die mit mehr als zwei Knoten verbunden sind.

Zusammenfassend wurden oben stehen verschiedene Konstruktionsbedingungen für Kanten in einem Posen-Graphen beschrieben, die Odometrie-Positionsdaten entsprechen. Diese Konstruktionsbedingungen resultieren in einer Kettengeometrie des Posen-Graphen. Aufgrund der Kettengeometrie des Posen-Graphen kann die Optimierungszeitdauer verkürzt werden, sodass kürzere Laufzeiten für entsprechende Techniken zur Positionsbestimmung einer beweglichen Maschine erhalten werden können. Dabei ermöglichen es diese Techniken weiterhin, etablierte Optimierungsalgorithmen, wie beispielsweise eine Cholesky-Zerlegung, anzuwenden.

Selbstverständlich können die Merkmale der vorab beschriebenen Ausführungsformen und Aspekte der Erfindung im Rahmen des durch die Ansprüche definierten Schutzumfangs miteinander kombiniert werden. Insbesondere können die Merkmale im Rahmen des durch die Ansprüche definierten Schutzumfangs nicht nur in den beschriebenen Kombinationen, sondern auch in anderen Kombinationen oder für sich genommen verwendet werden.

Beispielsweise wurden voranstehend verschiedene Aspekte in Bezug auf die Optimierung im Zusammenhang mit der Cholesky-Zerlegung beschrieben. Im Allgemeinen können aber auch andere Optimierungsalgorithmen zum Durchführen der Optimierung verwendet werden, wie beispielsweise ein Gauß-Newton-Verfahren.

Z.B. wurden voranstehend verschiedenste Beispiele in Bezug auf das Erhalten der geschätzten Position aus dem Optimieren des Posen-Graphen beschrieben. Alternativ oder zusätzlich kann es möglich sein, eine geschätzte Orientierung bzw. Odometrie des Kraftfahrzeugs aus dem Optimieren des Posen-Graphen zu erhalten und z.B. im Rahmen des Steuerns der Fahrerassistenzfunktionalität zu berücksichtigen.

Z.B. wurden voranstehend verschiedenste Beispiele in Bezug auf das Steuern einer Fahrerassistenzfunktionalität für autonomes Fahren beschrieben. Alternativ oder zusätzlich können auch andere Fahrerassistenzfunktionalitäten gesteuert werden, z.B. teil- oder hochautomatisierte Fahrtlösungen, etc.

Voranstehend wurden verschiedene Beispiele in Bezug auf das Bestimmen einer geschätzten Position aus dem Optimieren des Posen-Graphen beschrieben. Solche Techniken, die einen Posen-Graphen mit Kettenstruktur betreffen, können aber auch für andere Graphen-basierte Problemstellungen angewendet werden. Beispiele umfassen zum Beispiel Kalibrierungsprobleme und SLAM-Probleme.

**Bezugszeichenliste**

| | |
|---|---|
| t.1 - t.13 | Zeitpunkt |
| 1 - 5 | Schritt |
| 101 | Absolut-Positioniersystem |
| 102 | Absolut-Positioniersystem |
| 111 | Odometrie-Positioniersystem |
| 112 | Odometrie-Positioniersystem |
| 113 | Odometrie-Positioniersystem |
| 121 | Schnittstelle |
| 122 | Schnittstelle |
| 123 | Prozessor |
| 124 | Speicher |
| 129 | Fahrerassistenz |
| 151 | Ortungsfusion |
| 152 | Graphenverwaltung |
| 153 | Backend, Optimierung |
| 190 | Ist-Position |
| 191 | Zuverlässigkeit |
| 201 | Zeitintervall |
| 202 | Abtastrate |
| 203 | Unterbrechung |
| 105, 106 | Roh-Absolut-Positionsdaten |
| 115, 116 | Roh-Odometrie-Positionsdaten |
| 615 | Odometrie-Positionsdaten |
| 661, 661A | Posen-Graph |
| 662 | Interpolation |
| 671, 671-1 -671-4 | Knoten |
| 672 | Kanten |
| 605, 606 | Absolut-Positionsdaten |
| 901 | Systemmatrix |
| 902, 903 | Einträge der Systemmatrix |

**Patentansprüche**

1. Verfahren, das umfasst:

- Empfangen von Roh-Absolut-Positionsdaten (105, 106) als Ausgabe mindestens eines Absolut-Positioniersystems (101, 102) einer Maschine,
- Interpolieren der Roh-Absolut-Positionsdaten (105, 106) basierend auf einer vorgegebenen Taktrate zum Ermitteln von interpolierten Absolut-Positionsdaten (605, 606) für jeden von mehreren entsprechend der Taktrate bestimmten Zeitpunkten, wobei für jeden der Zeitpunkte jeweils ein interpoliertes Absolut-Positionsdatum (605, 606) ermittelt wird,
- Empfangen von Roh-Odometrie-Positionsdaten (115, 116) als Ausgabe mindestens eines Odometrie-Positioniersystems (111, 112) der Maschine,
- Interpolieren der Roh-Odometrie-Positionsdaten (115, 116) auf die vorgegebene Taktrate zum Ermitteln von interpolierten Odometrie-Positionsdaten (615, 616) der Maschine,
- Erzeugen (152) eines Posen-Graphen (661) mit einer Kettengeometrie, bei dem Optimierungsknoten (671) seriell aufgereiht sind und kein Optimierungsknoten (671) mehr als zwei direkt benachbarte Optimierungsknoten (671) aufweist und die Optimierungsknoten (671) in gemäß der Taktrate bestimmten, zeitlich festen Abständen eingefügt werden, wobei Fixknoten des Posen-Graphen (661) den interpolierten Absolut-Positionsdaten (605, 606) entsprechen und über Randbedingungen mit den Optimierungsknoten (671) verknüpft sind, und wobei Kanten (672) zwischen Optimierungsknoten (671) aus den interpolierten Odometrie-Positionsdaten (615, 616) gebildet sind und jeweils zwei direkt benachbarte Optimierungsknoten (671) verbinden, und
- Optimieren (153) des Posen-Graphen (661) durch Verschieben von Optimierungsknoten (671) zum Erhalten einer geschätzten Position (190) der Maschine aus den verschobenen Optimierungsknoten (671).

2. Verfahren nach Anspruch 1,
wobei die Maschine ein Kraftfahrzeug ist,
und wobei das Verfahren weiterhin umfasst:

- Steuern einer Fahrerassistenzfunktionalität (129) basierend auf der geschätzten Position (190) des Kraftfahrzeugs.

3. Verfahren nach einem der vorhergehenden Ansprüche,
wobei das Interpolieren der Roh-Odometrie-Positionsdaten (115, 116) eine Verringerung der Zeitauflösung zumindest einiger der derart ermittelten interpolierten Odometrie-Positionsdaten (615, 616) gegenüber den entsprechenden Roh-Odometrie-Positionsdaten (115, 116) entspricht.

4. Verfahren nach einem der voranstehenden Ansprüche,

wobei die interpolierten Absolut-Positionsdaten (605, 606) basierend auf der Ausgabe eines ersten Absolut-Positioniersystems (101, 102) jeweils für mehrere Zeitpunkte in einem ersten Zeitintervall (201) ermittelt werden,
wobei die interpolierten Absolut-Positionsdaten (605, 606) basierend auf der Ausgabe eines zweiten Absolut-Positioniersystems (101, 102) jeweils für mehrere Zeitpunkte in einem zweiten Zeitintervall (201) ermittelt werden,
und wobei die interpolierten Absolut-Positionsdaten (605, 606) für die mehreren Zeitpunkte in dem ersten Zeitintervall (201) nicht basierend auf der Ausgabe des zweiten Absolut-Positioniersystems (101, 102) ermittelt werden.

5. Verfahren nach einem der voranstehenden Ansprüche, umfassend:

- selektives Verwerfen von Teilen der Roh-Absolut-Positionsdaten (105, 106) und von Teilen der Roh-Odometrie-Positionsdaten (115, 116) vor dem Erzeugen des Posen-Graphen (661),

wobei das selektive Verwerfen optional auf einer Zeitdifferenz zwischen der IST-Zeit und einem Zeitstempel der jeweiligen Roh-Absolut-Positionsdaten (105, 106) und der Roh-Absolut-Odometriedaten basiert.

6. Steuergerät (120), das umfasst:

- mindestens eine Schnittstelle (121, 122), die eingerichtet ist, Roh-Absolut-Positionsdaten (105, 106) als Ausgabe mindestens eines Absolut-Positioniersystems (101, 102) einer Maschine zu empfangen, und Roh-Odometrie-Positionsdaten (115, 116) als Ausgabe mindestens eines Odometrie-Positioniersystems (111, 112) der Maschine zu empfangen,
- mindestens einen Prozessor (123), der eingerichtet ist,
die Roh-Absolut-Positionsdaten (105, 106) basierend auf einer vorgegebenen Taktrate zu interpolieren zum Ermitteln von interpolierten Absolut-Positionsdaten (605, 606) für jeden von mehreren entsprechend der Taktrate bestimmten Zeitpunkten, wobei für jeden der Zeitpunkte jeweils ein interpoliertes Absolut-Positionsdatum (605, 606) ermittelt wird, die Roh-Odometrie-Positionsdaten (115, 116) zum Ermitteln von interpolierten Odometrie-Positionsdaten (615, 616) der Maschine auf die vorgegebene Taktrate zu interpolieren,
einen Posen-Graphen (661) mit einer Kettengeometrie zu erzeugen, bei dem Optimierungsknoten (671) seriell aufgereiht sind und kein Optimierungsknoten (671) mehr als zwei direkt benachbarte Optimierungsknoten (671) aufweist und die Optimierungsknoten (671) in gemäß der Taktrate bestimmten, zeitlich festen Abständen eingefügt werden, wobei Fixknoten des Posen-Graphen (661) den interpolierten Absolut-Positionsdaten (605, 606) entsprechen und über Randbedingungen mit den Optimierungsknoten (671) verknüpft sind,
und wobei Kanten (672) zwischen Optimierungsknoten (671) aus den interpolierten Odometrie-Positionsdaten (615, 616) gebildet sind und jeweils zwei direkt benachbarte Optimierungsknoten (671) verbinden, und
den Posen-Graphen (661) durch Verschieben von Optimierungsknoten (671) zu optimieren (153) zum Erhalten einer geschätzten Position (190) der Maschine aus den verschobenen Optimierungsknoten (671).

7. Steuergerät (120) nach Anspruch 6,
wobei das Steuergerät (120) eingerichtet ist, ein Verfahren nach einem der Ansprüche 2 - 5 durchzuführen.

**Claims**

1. Method, which comprises:

   - receiving raw absolute position data (105, 106) as output of at least one absolute positioning system (101, 102) of a machine,
   - interpolating the raw absolute position data (105, 106) on the basis of a specified clock rate for determining interpolated absolute position data (605, 606) for each of a plurality of times determined according to the clock rate, wherein an interpolated absolute position datum (605, 606) is determined for each of the times,
   - receiving raw odometry position data (115, 116) as output of at least one odometry positioning system (111, 112) of the machine,
   - interpolating the raw odometry position data (115, 116) on the specified clock rate for determining interpolated odometry position data (615, 616) of the machine,
   - generating (152) a pose graph (661) having a chain geometry, in which optimization nodes (671) are arranged in series and no optimization node (671) has more than two directly adjacent optimization nodes (671), and the optimization nodes (671) are inserted in temporally fixed intervals determined according to the clock rate,

     wherein fixed nodes of the pose graph (661) correspond to the interpolated absolute position data (605, 606) and are associated with the optimization nodes (671) via boundary conditions,
     and wherein edges (672) between optimization nodes (671) are formed from the interpolated odometry position data (615, 616) and each connect two directly adjacent optimization nodes (671), and

   - optimizing (153) the pose graph (661) by shifting optimization nodes (671) to obtain an estimated position (190) of the machine from the shifted optimization nodes (671).

2. Method according to claim 1,

   wherein the machine is a motor vehicle,
   and wherein the method also comprises:

   - controlling a driver assistance functionality (129) on the basis of the estimated position (190) of the motor vehicle.

3. Method according to either of the preceding claims,
   wherein interpolating the raw odometry position data (115, 116) corresponds to a reduction in the time resolution of at least some of the interpolated odometry position data (615, 616), determined in this manner, relative to the corresponding raw odometry position data (115, 116).

4. Method according to any of the preceding claims,

   wherein the interpolated absolute position data (605, 606) are determined on the basis of the output of a first absolute positioning system (101, 102) in each case for a plurality of times in a first time interval (201),
   wherein the interpolated absolute position data (605, 606) are determined on the basis of the output of a second absolute positioning system (101, 102) in each case for a plurality of times in a second time interval (201),
   and wherein the interpolated absolute position data (605, 606) for the plurality of times in the first time interval (201) are not determined on the basis of the output of the second absolute positioning system (101, 102).

5. Method according to any of the preceding claims, comprising:

   - selectively discarding portions of the raw absolute position data (105, 106) and portions of the raw odometry position data (115, 116) prior to generating the pose graph (661),

   wherein the selective discarding is optionally based on a time difference between the actual time and a time stamp of the relevant raw absolute position data (105, 106) and the raw absolute odometry data.

6. Controller (120), which comprises:

   - at least one interface (121, 122), which is configured

to receive raw absolute position data (105, 106) as output of at least one absolute positioning system (101, 102) of a machine, and
to receive raw odometry position data (115, 116) as output of at least one odometry positioning system (111, 112) of the machine,

- at least one processor (123), which is configured

to interpolate the raw absolute position data (105, 106) on the basis of a specified clock rate for determining interpolated absolute position data (605, 606) for each of a plurality of time points determined according to the clock rate, wherein an interpolated absolute position datum (605, 606) is determined in each case for each of the times,
to interpolate the raw odometry position data (115, 116) for determining interpolated odometry position data (615, 616) of the machine on the specified clock rate,
to generate a pose graph (661) having a chain geometry, in which optimization nodes (671) are arranged in series and no optimization node (671) has more than two directly adjacent optimization nodes (671) and the optimization nodes (671) are inserted in temporally fixed intervals determined according to the clock rate, wherein fixed nodes of the pose graph (661) correspond to the interpolated absolute position data (605, 606) and are associated with the optimization nodes (671) via boundary conditions,
and wherein edges (672) between optimization nodes (671) are formed from the interpolated odometry position data (615, 616) and each connect two directly adjacent optimization nodes (671), and
to optimize (153) the pose graph (661) by shifting optimization nodes (671) to obtain an estimated position (190) of the machine from the shifted optimization nodes (671).

7. Controller (120) according to claim 6,
wherein the controller (120) is configured to carry out a method according to any of claims 2-5.


**Revendications**

1. Procédé, lequel comprend :

- la réception de données de position absolue brutes (105, 106) en tant que sortie d'au moins un système de positionnement absolu (101, 102) d'une machine,
- interpolation des données de position absolue brutes (105, 106) sur la base d'une fréquence d'horloge prédéfinie pour la détermination de données de position absolue interpolées (605, 606) pour chacun parmi plusieurs instants déterminés en fonction de la fréquence d'horloge, dans lequel respectivement une donnée de position absolue interpolée (605, 606) est déterminée pour chacun des instants,
- réception de données de position odométrique brutes (115, 116) en tant que sortie d'au moins un système de positionnement odométrique (111, 112) de la machine,
- interpolation des données de position odométrique brutes (115, 116) à la fréquence d'horloge prédéfinie pour la détermination de données de position odométrique interpolées (615, 616) de la machine,
- génération (152) d'un graphe de poses (661) comportant une géométrie de chaîne et dans lequel des noeuds d'optimisation (671) sont rangés en série et aucun noeud d'optimisation (671) ne présente plus de deux noeuds d'optimisation (671) directement adjacents et les noeuds d'optimisation (671) sont insérés à des intervalles fixes dans le temps et déterminés en fonction de la fréquence d'horloge,

dans lequel des noeuds fixes du graphe de poses (661) correspondent aux données de position absolue interpolées (605, 606) et sont reliés aux noeuds d'optimisation (671) par l'intermédiaire de conditions aux limites,
et dans lequel des arêtes (672) entre des noeuds d'optimisation (671) sont formées à partir des données de position odométrique interpolées (615, 616) et relient respectivement deux noeuds d'optimisation (671) directement adjacents, et

- l'optimisation (153) du graphe de poses (661) en déplaçant des noeuds d'optimisation (671) pour obtenir une position estimée (190) de la machine à partir des noeuds d'optimisation (671) déplacés.

2. Procédé selon la revendication 1,

dans lequel la machine est un véhicule automobile,
et dans lequel le procédé comprend en outre :

- la commande d'une fonction d'assistance au conducteur (129) sur la base de la position estimée (190) du véhicule automobile.

**3.** Procédé selon l'une des revendications précédentes,
dans lequel l'interpolation des données de position odométrique brutes (115, 116) correspond à une réduction de la résolution temporelle d'au moins certaines des données de position odométrique interpolées (615, 616) ainsi déterminées par rapport aux données de position odométrique brutes (115, 116) correspondantes.

**4.** Procédé selon l'une des revendications précédentes,

dans lequel les données de position absolue interpolées (605, 606) sont déterminées sur la base de la sortie d'un premier système de positionnement absolu (101, 102) respectivement pour plusieurs instants dans un premier intervalle de temps (201),
dans lequel les données de position absolue interpolées (605, 606) sont déterminées sur la base de la sortie d'un second système de positionnement absolu (101, 102) respectivement pour plusieurs instants dans un second intervalle de temps (201),
et dans lequel les données de position absolue interpolées (605, 606) ne sont pas déterminées pour les plusieurs instants dans le premier intervalle de temps (201) sur la base de la sortie du second système de positionnement absolu (101, 102).

**5.** Procédé selon l'une des revendications précédentes, comprenant :

- le rejet sélectif de parties des données de position absolue brutes (105, 106) et de parties des données de position odométrique brutes (115, 116) avant la génération du graphe de poses (661),

dans lequel le rejet sélectif est éventuellement basé sur une différence de temps entre le temps réel et une estampille temporelle des données de position absolue brutes (105, 106) respectives et des données odométriques absolues brutes.

**6.** Appareil de commande (120), lequel comprend :

- au moins une interface (121, 122) qui est configurée pour recevoir des données de position absolue brutes (105, 106) en tant que sortie d'au moins un système de positionnement absolu (101, 102) d'une machine, et pour recevoir des données de position odométrique brutes (115, 116) en tant que sortie d'au moins un système de positionnement odométrique (111, 112) de la machine,
- au moins un processeur (123), lequel est configuré

pour interpoler les données de position absolue brutes (105, 106) sur la base d'une fréquence d'horloge prédéfinie pour la détermination de données de position absolue interpolées (605, 606) pour chacun parmi plusieurs instants déterminés en fonction de la fréquence d'horloge, dans lequel, pour chacun des instants, respectivement une donnée de position absolue interpolée (605, 606) est déterminée, pour interpoler les données de position odométrique brutes (115, 116) à la fréquence d'horloge prédéfinie pour la détermination de données de position odométrique interpolées (615, 616) de la machine, pour générer un graphe de poses (661) comportant une géométrie de chaîne et dans lequel des noeuds d'optimisation (671) sont rangés en série et aucun noeud d'optimisation (671) ne présente plus de deux noeuds d'optimisation (671) directement adjacents et les noeuds d'optimisation (671) sont insérés à des intervalles fixes dans le temps et déterminés en fonction de la fréquence d'horloge, dans lequel des noeuds fixes du graphe de poses (661) correspondent aux données de position absolue interpolées (605, 606) et sont reliés aux noeuds d'optimisation (671) par l'intermédiaire de conditions aux limites,
et dans lequel des arêtes (672) entre des noeuds d'optimisation (671) sont formées à partir des données de position d'odométrie interpolées (615, 616) et relient respectivement deux noeuds d'optimisation (671) directement adjacents, et
pour optimiser (153) le graphe de poses (661) en déplaçant des noeuds d'optimisation (671) pour obtenir une position estimée (190) de la machine à partir des noeuds d'optimisation (671) déplacés.

**7.** Appareil de commande (120) selon la revendication 6,
dans lequel l'appareil de commande (120) est configuré pour exécuter un procédé selon l'une des revendications 2 à 5.

FIG. 1

111 → LIDAR      201 ⟋▨▨▨▨▨▨▨▨▨▨▨▨▨▨ 20 Hz ◄— 202

112 → V-Pose     201 ⟋▨▨▨▨▨▨▨▨▨ 0,7 Hz ◄— 202

101 → Marker     201 ⟋▨▨▨▨▨▨▨▨ 0,5 Hz ◄— 202

113 → Fahrwerk-Odometrie  ▨▨▨▨▨▨▨▨▨▨▨▨ ▨▨▨ 100 Hz ◄— 202
                          201

102 → GPS        201 ⟋▨▨▨▨ ▨▨▨ 1 Hz ◄— 202

Zeit

FIG. 2

FIG. 3

FIG. 4

```
                    ┌─────────────────┐
                    │                 │
              ┌─────▼─────┐           │
             ╱             ╲          │
            ╱   Nächster    ╲  ─── 1  │
            ╲     Takt?      ╱         │
             ╲             ╱          │
              └─────┬─────┘           │
                    │ Ja             │
          ┌─────────▼─────────┐       │
          │      Erstelle     │       │
          │ Absolut-Positionsdaten ── 2 │
          │     für [t0-T,t0] │       │
          └─────────┬─────────┘       │
                    │                 │
          ┌─────────▼─────────┐       │
          │      Erstelle     │       │
          │ Odometrie-Positionsdaten ─ 3 │
          │     für [t0-T,t0] │       │
          └─────────┬─────────┘       │
                    │                 │
          ┌─────────▼─────────┐       │
          │   Erzeuge Posen-Graph   │ │
          │ aus Odometrie-Positionsdaten ── 4 │
          │ und Absolut-Positionsdaten │ │
          └─────────┬─────────┘       │
                    │                 │
          ┌─────────▼─────────┐       │
          │  Optimiere Posen-Graph │  │
          │ und gebe Ist-Position aus ── 5 │
          └─────────┬─────────┘       │
                    └─────────────────┘
```

FIG. 5

FIG. 6

EP 3 359 914 B1

FIG. 7

EP 3 359 914 B1

FIG. 8

FIG. 9

FIG. 10

FIG. 11

FIG. 12

FIG. 13

FIG. 14

35

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013208521 A1
- US 20140078258 A1
- DE 102013218043 A1
- DE 102014211178 A1
- DE 102014211166 A1

**In der Beschreibung aufgeführte Nicht-Patentliteratur**

- **REHDER, J. et al.** Global Pose Estimation with Limited GPS and Long Range Visual Odometry. *IEEE International Conference on Robotics and Automation,* 2012, 627-633
- **KÜMMERLE, R. et al.** g2o: A General Framework for Graph Optimization. *Proceedings of the IEEE International Conference on Robotics and Automation (ICRA),* 2011